# EUROPEAN PATENT SPECIFICATION

(11) **EP 1 592 160 B1**
(45) Date of publication and mention of the grant of the patent: **26.03.2008**
(21) Application number: 04010223.8
(22) Date of filing: 29.04.2004
(51) Int. Cl.: H04L 1/00, H04H 1/00

(54) **Superframe error coding in digital audio broadcasting systems**
Fehlerkodierung in einem Überrahmen für digitalen Hörfunk (DAB)
Codage d'erreurs dans une supertrame pour la radiodiffusion numérique

(43) Date of publication of application: 02.11.2005
(73) Proprietor: MATSUSHITA ELECTRIC INDUSTRIAL CO., LTD, Kadoma-shi, Osaka 571-8501 (JP)
(72) Inventor: Becker, Ralf, 64546 Moerfelden-Walldorf (DE); Herrmann, Frank, 60316 Frankfurt (DE)
(74) Representative: Grünecker, Kinkeldey, Stockmair & Schwanhäusser Anwaltssozietät

(56) References cited:
- EP-A- 0 817 411
- EP-A- 0 969 614
- EP-A- 1 024 617

## Description

### Field of the Invention

The present invention relates to a subchannel structure within a main service channel for transmitting data of at least one application in a digital audio broadcasting system, such as DAB or DRM. Further the present invention provides methods for transmitting and receiving application data using the subchannel structure, as well as a corresponding broadcasting station and receiving terminal. Moreover the present invention provides a digital broadcasting system transmitting data using the proposed subchannel structure.

### Technical Background

The Digital Audio Broadcasting (DAB) system has been developed by the European Eureka 147/DAB Project in close co-operation with the European Broadcasting Union (EBU) and has been finally standardized in ETSI EN 300 401: "Radio Broadcasting Systems; Digital Audio Broadcasting (DAB) to mobile, portable and fixed receivers" (available at http://www.etsi.org).

DAB provides high-quality sound and data as well as very robust reception quality for all types of receivers, e.g. home hi-fi, portable, personal and mobile terminals. Using COFDM (Coded Orthogonal Frequency Division Multiplex) the transmission medium is capable of delivering program services to more listeners and more robust, than is possible with the existing VHF/FM sound broadcasting.

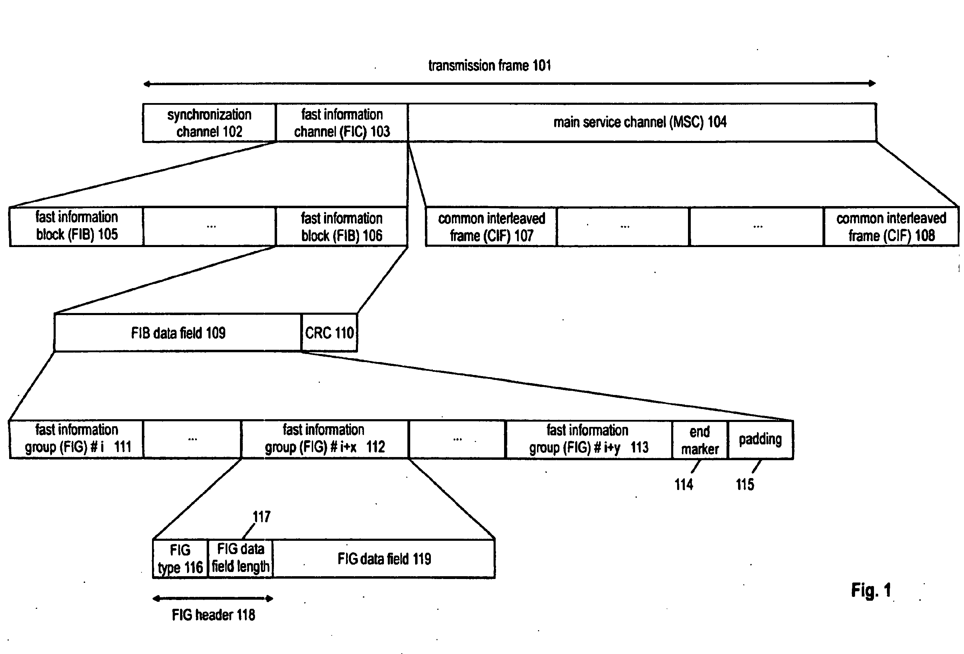

The DAB transmission signal is built around a time-multiplex comprising three channels: a synchronization channel 102, a fast information channel (FIC) 103 and a main service channel (MSC) 104, as shown in Fig. 1. Together, these three channels form a so-called transmission frame 101.

### Synchronization channel

The synchronization channel 102 incorporates basic receiver control mechanisms, such as automatic frequency control (AFC), automatic gain control (AGC) and a phase reference. It may also be used to carry encoded transmitter identification information.

### Fast Information Channel

The fast information channel (FIC) 103 has a limited capacity for data transmissions but may be capable of supplying information to a receiver faster than the main service channel allows. This is because data on the FIC is not subjected to time-interleaving in the COFDM coding process as the data sent through main service channel (MSC) 104.

The degree of protection of FIC data may be given by convolutional coding at a permanently fixed code rate of about 1/3 because otherwise it would require another level of signaling, with even faster response and even better protection, to signal other possibilities. In order to achieve acceptable error performance, FIC data is repeated regularly. The main application of the FIC 103 is the provision of the multiplex configuration information (MCI) to the receivers. The multiplex configuration information defines the multiplex structure of data on the MSC 104. Furthermore the FIC 103 comprises service information (SI). Other data service components may also be transmitted in the FIC.

It is further possible to change the multiplex configuration, while maintaining the continuity of services. In this case, two sets of multiplex configuration information may be transmitted in parallel in the FIC (current/next configuration), which temporarily reduces the remaining capacity to transport service information and/or data service components.

### Main service channel

The main service channel (MSC) 104 is the largest portion of the DAB ensemble carrying the major portion of the transmission data.

An ensemble may be understood as the transmitted signal comprising a set of regularly and closely spaced orthogonal carriers. The ensemble may be the entity which is received and processed, and may contain program and data services.

The main service channel 104 may e.g. be divided into sub-channels to provide different audio service components for broadcasting. In DAB terminology, services are considered to be either (audio) program services or data services and are supplied by a service provider. It is worth to note that according to the DAB specifications the MSC may comprise one to four common interleaved frames (CIFs) which provide data streams of different applications or services to the receiver.

Each sub-channel may also carry program associated data (PAD) when carrying DAB audio frames. PAD may be audio-synchronous information and its contents may be intimately related to the audio. The PAD bytes in successive audio frames may constitute the PAD channel. PAD may e.g. provide Dynamic Range Control (DRC) allowing the receiver to adapt the dynamic range of an audio signal to listening in a noisy environment, a Music/Speech indication, which indicates whether the transmitted sound comprises music or speech, and/or a command channel to convey, synchronously to the music, special commands to the decoder. Program related text and/or a Universal Product Code/European Article Number, when transmitting by digital carriers of prerecorded software.

The MSC 104 may have a gross capacity of 2.3 Mbit/s. Depending on the convolution code rates this leads to net bit rates between 0.6 and 1.8 Mbit/s. Data samples of the source signal are spread over sixteen logical frame periods (time interleaving). The transmitted signal consists of consecutive COFDM (Coded Orthogonal Frequency Division Multiplex) symbols generated by means of D-QPSK (Differential Quadrature Phase Shift Keying) and frequency interleaving.

### DAB Transport Mechanisms

DAB provides basically four Transport Mechanisms for content. The content data may be transmitted as MSC Stream Audio, MSC Stream Data, in a Fast Information Data Channel (FIDC) or as MSC Packet Data (packet mode).

Depending on the reception conditions and the applied convolutional error control code rate a part of the received DAB data packets - when operated in packet mode - may be damaged and must be discarded.

The DAB network is typicaiiy designed for Bit Error Rates of 10⁻⁴ at the receiver after convolutional decoding. For some user applications, e.g. video applications require lower Bit Error Rates (BER) in the order of 10⁻⁸ to 10⁻¹⁰ for widely undisturbed presentation.

In order to improve the BER for DAB or DRM transmissions the copending European patent application (serial no. EP 04003634.5, "Enhanced Error Protection for Packet-Based Service delivery in digital broadcasting systems") of the applicant proposes a new packet structure which will be discussed in further detail herein below. Though the packet structure proposed in the copending application may increase the performance of the system significantly when assuming a Gaussian channel model, mobile channels usually have longer burst errors which may not be corrected using the proposed method of the copending application. One possibility may be to use a longer interleaving structure in the transmission chain. This may change the error distribution to a Gaussian form facilitating the use of the error correction mechanism proposed by the copending application again. However, existing and already delivered receivers may not receive signals employing a longer interleaving structure. Hence, this solution is not backward-compatible.

### SUMMARY OF THE INVENTION

The object of the present invention is to increase the number of data packets of which undamaged data can be derived under identical reception conditions in a backward-compatible way.

The object is solved by the subject matter of the independent claims. Advantageous embodiments of the present invention are subject matters to the dependent claims.

According to an embodiment of the present invention a subchannel structure within a main service channel in a digital audio broadcasting system for transmitting data of at least one application is provided. The subchannel structure may comprise a predetermined number of data packets, wherein each data packet comprises a header enabling the identification of an associated application and the length of a packet data field, and the packet data field comprising a field with application data of the identified application. The subchannel structure may further comprise predetermined number of error control packets, wherein each of the error control packets comprises an error control code field the data of which is generated based on at least a part of the packet data field and/or at least a part of the packet header of the data packets and a CRC field preceding the error control code field for protecting same.

In a further embodiment the data packets and the error control packets may be of predetermined length.

The individual bytes of data packets and error control packets are representable in matrix form, wherein each row of the matrix comprises the bytes of a data packet for which the data of the error code field have been generated or error control code bytes of the data of the error control code field of an error control packet, and wherein each of the error control bytes of each column of the matrix is generated based on the bytes of the data packets in the column.

Moreover, another embodiment of the present invention provides a subchannel structure, wherein the packet data field of the data packet may further comprise an error control code field generated based on at least a part of the packet data field and/or at least a part of the packet header.

Further, the data of the error control code field in the error control packets and/or the data packets may constitute error control code data generated using a Reed-Solomon code or a turbo code or another forward error correction code.

Another embodiment of the present invention provides a method for transmitting data of at least one application within a subchannel structure of packets in a digital audio broadcasting system. The method may comprise the steps of forming a predetermined number of data packets, wherein each of the data packets is formed by concatenating a packet header enabling the identification an associated application and the length of application data in a packet data field, and a packet data field comprising a field with the application data of the associated application. The method further suggests forming a predetermined number of error control packets, wherein each of the error control packets is formed by concatenating an error control code field, the data of which is generated based on at least a part of the packet data field and/or at least a part of the packet header and a CRC field preceding the error control code field for protecting same, and forming a subchannel structure by a concatenation of the data packets and the error control packets. Upon generating a sequence of transmissions frame comprising the formed subchannel structure, the transmission frames may be transmitted.

As outlined above, the individual bytes of data packets and error control packets are representable in matrix form, wherein each row of the matrix comprises the bytes of a data packet for which the data of the error code field have been generated or error control code bytes of the data of the error control code field of an error control packet. In a further embodiment and based on this matrix representation, the method may further comprise the step of generating each of the error control bytes of each column of the matrix based on the bytes of the data packets in the column.

Moreover, the packet data field of each data packet may further comprise an error control code field generated based on at least a part of the packet data field and/or at least a part of the packet header.

In another embodiment, the data of the error control code field of the error control packet and/or the data packet may be generated using a Reed-Solomon code or a turbo code or another forward error correction code.

Moreover, information on the used error control code to generate the data of the error control code field of the error control packets and/or the data packets and the corresponding at least one error control code scheme may be transmitted in an information data stream being part of the transmission frame. For example, the information data stream may be an FIC.

Another embodiment of the present invention provides a method for receiving a packet-based data stream of at least one application in a digital audio broadcasting system. The method may comprise the steps of receiving a transmission signal comprising the data stream, extracting at least one transmission frame comprising the data stream from the transmission signal and extracting a main service channel from the transmission frame. Moreover, a subchannel structure comprising a concatenation of a predetermined number of data packets and a predetermined number of error control packets may be extracted from the main service channel, wherein each of the error control packets comprises error control code data protecting at least one part of the data packets and each of the data packets comprises a CRC field. Next, the data integrity of the data packets may be verified using the CRC field, wherein data packets of which data integrity is not confirmed are marked and errors in the marked data packets may be corrected using at least one of the error control packets.

In a further embodiment, each data packet further may comprise error control code data an error control code field, and errors in a data packet may be corrected using the error control code data of the data packet. In this embodiment, the data packet is marked if the errors can not be corrected using the error control code data of the data packet.

In another embodiment, each data packet may comprise a packet header enabling the identification an associated application and the length of application data in a packet data field, and a packet data field comprising a field with the application data of the associated application. Each error control packet may comprise an error control code field, the data of which is generated based on at least a part of the packet data field and/or at least a part of the packet header and a CRC field preceding the error control code field for protecting same.

In another embodiment the method further comprises the step of verifying the data integrity of the error control code field of each error control packet and using only those error control code packets for correcting the marked data packets for which data integrity is verified.

The individual bytes of data packets and error control packets are representable in matrix form, as outlines above, and the method may further comprise the step of using the error control bytes of each row to correct a byte of at least one marked data packet in the row.

In another embodiment, an information data stream may be further extracted from the transmission frame and information on the at least one applied error control code and an at least one corresponding error control code scheme used to generate the error control code data in the error control packets and/or the data packets may be extracted from the information data stream.

According to a further embodiment, the present invention provides a broadcast station for transmitting data of at least one application within a subchannel structure of packets in a digital audio broadcasting system.

The broadcast station may comprise processing means for forming a predetermined number of data packets, wherein each of the data packets is formed by concatenating a packet header enabling the identification an associated application and the length of application data in a packet data field, and a packet data field comprising a field with the application data of the associated application, wherein the processing means is further adapted to form a predetermined number of error control packets, wherein each of the error control packets is formed by concatenating an error control code field, the data of which is generated based on at least a part of the packet data field and/or at least a part of the packet header and a CRC field preceding the error control code field for protecting same, to form a subchannel structure by a concatenation of the data packets and the error control packets, and to generating a transmission frame comprising the formed subchannel structure. Moreover, the broadcast station comprises a transmitter for transmitting the transmission frame.

Further, the broadcast station may comprise means adapted to perform the steps of the transmission methods according to the different embodiments outlined above.

According to another embodiment, a terminal for receiving a packet-based data stream of at least one application in a digital audio broadcasting system is provided. The terminal may comprising a receiver for receiving a transmission signal comprising the data stream, and processing means for extracting at least one transmission frame comprising the data stream from the transmission signal, wherein the processing means is adapted to extract a main service channel from the transmission frame , and to extract a subchannel structure comprising a concatenation of a predetermined number of data packets and a predetermined number of error control packets from the main service channel, wherein each of the error control packets comprises error control code data protecting at least one part of the data packets and each of the data packets comprises a CRC field. Moreover, the terminal may comprise verification means for verifying the data integrity of the data packets using the CRC field, wherein data packets of which data integrity is not confirmed are marked, and error correction means for correcting errors in the marked data packets using at least one of the error control packets.

The terminal may further comprise means adapted to perform the reception method according to any embodiment outlined above.

Another embodiment of the present invention provides a digital audio broadcast system for transmitting data of at least one application within a subchannel structure of packets according to one of embodiments outlined above.

An even further embodiment according to the present invention provides a computer-readable medium for storing instructions that, when executed on a processor, cause the processor to transmit data of at least one application within a subchannel structure of packets in a digital audio broadcasting system by forming a predetermined number of data packets, wherein each of the data packets is formed by concatenating a packet header enabling the identification an associated application and the length of application data in a packet data field, and a packet data field comprising a field with the application data of the associated application, forming a predetermined number of error control packets, wherein each of the error control packets is formed by concatenating an error control code field, the data of which is generated based on at least a part of the packet data field and/or at least a part of the packet header and a CRC field preceding the error control code field for protecting same, forming a subchannel structure by a concatenation of the data packets and the error control packets, generating a transmission frame comprising the formed subchannel structure, and transmitting the transmission frame.

The computer readable medium may further store instructions that when executed by the processor cause the performance of the transmission method steps according to one of embodiments outlined above.

Moreover another embodiment according to the present invention provides a computer-readable medium for storing instructions that, when executed on a processor, cause the processor to receive a packet-based data stream of at least one application in a digital audio broadcasting system by receiving a transmission signal comprising the data stream, extracting at least one transmission frame comprising the data stream from the transmission signal, extracting a main service channel from the transmission frame, extracting a subchannel structure comprising a concatenation of a predetermined number of data packets and a predetermined number of error control packets from the main service channel, wherein each of the error control packets comprises error control code data protecting at least one part of the data packets and each of the data packets comprises a CRC field, verifying the data integrity of the data packets using the CRC field, wherein data packets of which data integrity is not confirmed are marked, and correcting errors in the marked data packets using at least one of the error control packets.

The computer readable medium may further store instructions that when executed by the processor cause the performance of the reception method steps according to one of embodiments outlined above.

### Brief description of the Figures

In the following the present invention is described in more detail in reference to the attached figures and drawings. Similar or corresponding details in the figures are marked with the same reference numerals.
- **Fig. 1**: shows an exemplary overview of the structure of a transmission frame in DAB,
- **Fig. 2**: shows an exemplary overview of the structure of a fast information group (FIG) in DAB,
- **Fig. 3 & 4**: show a DAB and DRM data packet structure, respectively, comprising an additional error control code field,
- **Fig. 5**: shows a DAB packet structure of a conventional data packet,

- **Fig. 6**: shows a suchannel structure of a main service channel according to an embodiment of the present invention,
- **Fig. 7**: shows a suchannel structure of a main service channel using packets of fixed length in a matrix representation according to an embodiment of the present invention,
- **Fig.8**: shows a byte-by-byte arrangement of subchannel packets according to an embodiment of the present invention,
- **Fig. 9 & 10**: show a flow chart illustrating the transmission of suchannel data according to an embodiment of the present invention,
- **Fig**. **11**: shows a conceptual DAB emission block diagram according to an embodiment of the present invention,
- **Fig. 12**: shows a conceptual DRM emission block diagram according to an embodiment of the present invention,
- **Fig. 13**: shows an exemplary delivery mechanism of service component data from a content provider via a broadcast station to a terminal according to an embodiment of the present invention,
- **Fig. 14a &14b**: show a flow chart of an exemplary reception method of a subchannel structure comprising a packet-based data stream within a transmission frame according to an embodiment of the present invention and
- **Fig. 15a & 15b**: show a flow chart of another exemplary reception method of a subchannel structure comprising a packet-based data stream within a transmission frame according to an embodiment of the present invention.

### Detailed Description of the Invention

As outlined previously, the present invention provides an additional error protection mechanism to transmissions in a digital audio broadcast system as for example DAB or DRM in a backward compatible way.

According to one of the various aspects of the present invention, methods for creating a superframe structure in the DAB transmission signal and for applying error block coding to this superframe structure are proposed in order to reduce the packet error rate (PER) of the received PAB packets. The superframe structure may thereby divide the received superframe into message and parity packets. This superframe structure may also be advantageously used in a power saving mode of the receiver: for example in case all data packets have been received successfully, the receiver may not need to receive the error control packets of the superframe structure allowing a correction of the data packets.

Since the superframe structure of a subchannel may be transported within several subsequent transmission frames, the receiver may detect the successful reception of the data packets before receiving the subsequent transmission frames (CIFs) in which the error control packets may be provided.Thus, it may turn off the receiving means within the receiver for the time period in which the error control packets are expected to be received or may simply not process same.

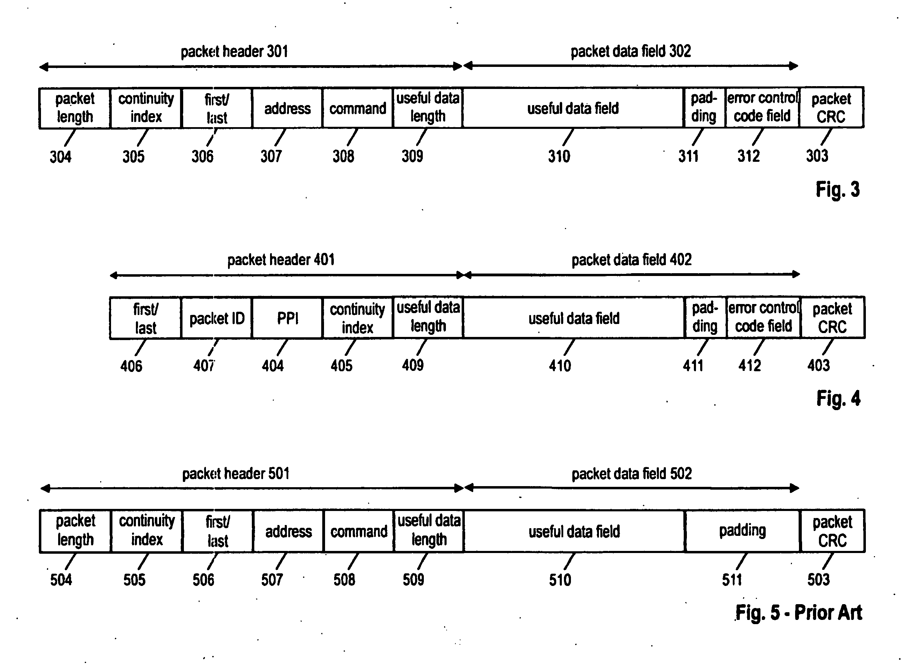

The error control code used in the present invention is the so called forward-error-correction coding to correct even without a feedback channel as for example described by Alister Burr in "Modulation and Coding for Wireless Communications", chapter 5, Prentice Hall, 2001. The error control code may comprise additional redundancy - for example parity bits - allowing the detection and correction of possible errors in the data packet. In contrast thereto, the packet CRC 303, 403 (see Fig. 3 and 4) only allows the detection but not the correction of errors. An example for such error control codes are cyclic block codes such as BCH-, Reed-Solomon (RS)-, or turbo codes. The error control code scheme may describe the total length of the packet, the length of the useful data and the mother code. An example for such a scheme is the RS(204,188) may describe a shortened Reed-Solomon Code RS(255,239) with a packet length of 204 bytes and 188 bytes of useful data.

According to one embodiment of the present invention, the mechanisms proposed by the present invention may also be used together with an enhanced packet structure as proposed in the copending European patent application (serial no. EP 04003634.5, "Enhanced Error Protection for Packet-Based Service delivery in digital broadcasting systems") of the applicant. This may have the advantage that the packet BER may be even further reduced compared to conventional systems while still maintaining backwards-compatibility.

In order to reduce the BER, it is proposed to employ a new packet structure of data packets for DAB illustrated in Fig. 3. A conventional data packet as specified for DAB is shown in Fig. 5. In order to outline the principles of the present invention in more detail an understanding of conventional and enhanced packet structures is discussed in the following paragraphs.

Both, the conventional data packet structure of Fig. 5 and the new data packet structure of Fig. 3 comprise a packet header 301, 501, a packet data field 302, 502 and a packet CRC field 303, 503.

The packet header 301, 501 may comprise a packet length field 304, 504 indicating the total data packet length. The packet length may for example be expressed in terms of bytes. The packet length may be chosen among a predetermined number of differently but fixed sized data packet structures, wherein the packet header 301, 501 and the packet CRC 303, 503 is of constant length but the length of the packet data field varies.
If for example four data packet structures of different data packet lengths exist, the packet length field may use two bits to differentiate between the four options.

The packet header's continuity index 305, 505 may represent a counter incremented by one for each successive packet in a series having the same address 307, 507. It may provide the link between successive data packets, carrying the same service component, i.e. data stream, regardless of the packet length. When for example implemented as a modulo-4 counter two bits are sufficient to encode this field.

The first/last flags 306, 506 may be used to identify particular data packets which form a succession of data packets which carry data groups of the same service component. For service components that are transported without data groups, the flags may be set to 0. When data groups are used to transport the service component, the first/last flags 306 may for example indicate an intermediate packet of a series if set to 00, the last data packet of a series if set to 01, the first data packet of a series if set to 10 and the only data packet if set to 11.

The address field 307, 507 may identify data packets carrying a particular service component within a sub-channel. To enable the provision of multiple service components within a single sub-channel 10 bits may be used to encode this field. When reserving the address 0 for padding packets up to 1,023 service components may be carried simultaneously in a sub-channel.

The command field 308, 508 of the packet header 301, 501 may indicate whether the packet is used for general data or for special commands. Finally, according to this embodiment of the present invention the packet header 301, 501 comprises a useful data length field 309, 509 which may be coded as an unsigned binary number to represent the length in bytes of the associated useful data field 310, 510 in the subsequent packet data field 302, 502.

Packet data field 302, 502 may comprise the useful data field 310, 510 and a padding field 311, 511. The useful data field 310, 510 may contain the useful service component data, i.e. the actual payload data of the data stream transmitted within data packet. Further, the both structure may comprise a padding field comprising the bytes required to complete the packet data field to match the total packet length the value given by the packet length field 304, 504.

In contrast to the conventional packet structure shown in Fig. 5 the proposed packet structure of Fig. 3 further comprises an error control code field which provides additional error correcting capabilities to the receiver to correct transmission errors within the data packet as will be outlined in more detail below.

The padding field 311 may only be present if the length of the packet header 301, the useful data field 310, the error control code field 312 and the packet CRC data 303 is smaller than the desired predetermined packet length. In this situation the padding field 311 may be included in order to match the desired packet length. It may be desirable to place the padding field 311 before the error control field 312 of the data packet, since the receiver may thus detect the error control field 312 even in case the useful data length field 309 of the data packet has been corrupted.

Finally, in both packet structures the packet CRC 303, 503 may be implemented as a 16-bit CRC word calculated on the packet header 301, 501 and the packet data field 302, 502. The generation of the packet CRC 303, 503 may for example be based on a polynomial proposed in the ITU-T Recommendation X.25.

Each data packet carries 2 bytes of CRC data 303, 503, which allows determining, if the data packet has been damaged or not. If it is damaged, it would have to be completely discarded in a conventional digital audio broadcasting system, since neither the packet address field 307, 507 nor the data packet length 304, 504 may be uniquely identified anymore. This may be due to the position(s) of the erroneous bit(s) within the data packet is/are unknown.

Therefore one possibility may be to apply improved protection to data packets by applying the additional error control code to the data packet or at least to those parts necessary for extracting an undamaged data payload 310 for the desired user application (see error control code field 312 of the data field 302 in Fig. 3). When correcting parts of an erroneous data packet it may be possible to extract application data from a data packet for which the CRC check failed. Hence, the payload may be derived from more received data packets than it would be feasible in the absence of the additional error control coding.

Also existing digital audio broadcasting receivers not aware of the newly introduced additional error control coding to each data packet may be able to derive the data payload 310, 510 for the desired user application in the case the CRC check succeeds (full backwards compatibility).

Another possibility may be a solution where the presence of the additional error control code information within the packet data field 302, 502 of data packets of a particular packet address does not need to be signaled to the receiver, if a predetermined error correction coding is applied and the error control code field is assumed to be of constant length.

However, to allow for a more flexible error control coding, the error control code used (e.g. Reed Solomon code, turbo code) and its corresponding error control code scheme (e.g. Reed-Solomon (204, 188)) as well as the length of the error control code field 312 in an information data stream may be signaled to the receiver. For example a Fast Information Group (FIG) of the FIC may be used to signal the error control coding parameters.

By employing the proposed new packet format introducing an additional error control coding for a packet based digital audio broadcasting transport mechanism not only the BER for transmitted data streams may be reduced but the proposed solution in the copending application also provides a fully back-wards compatible way for solving the object above, i.e. does not require any changes to conventional receivers.

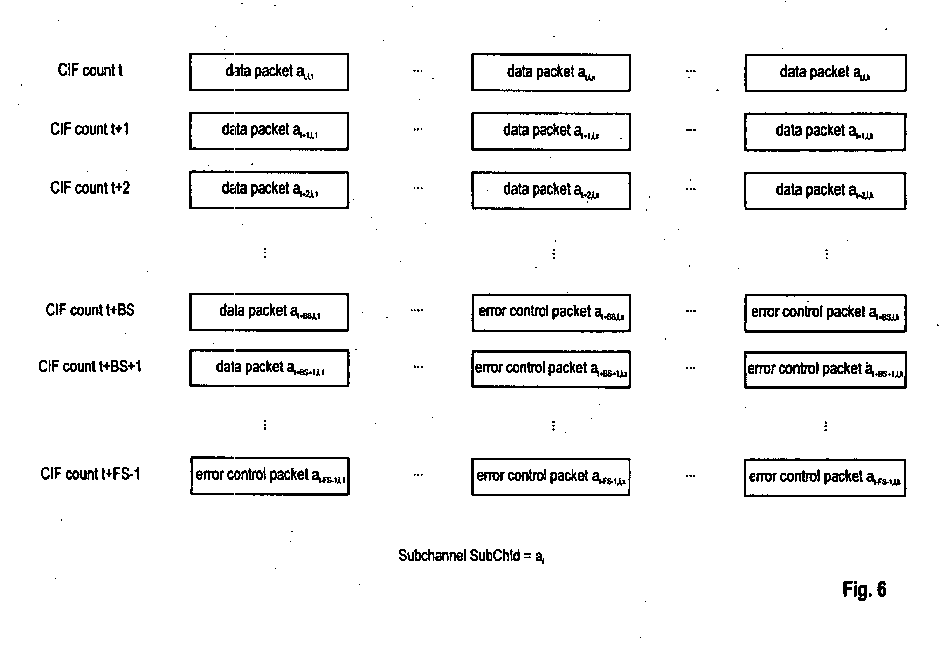

After discussing the advantages of the new proposed data packet structure, next a subchannel configuration comprising data packets and error control packets according to one embodiment of the present invention is outlined with reference to Fig. 6. A subchannel with subchannel identifier (SubChld) aᵢ is formed by a concatenation of a predetermined number of data packets and additional error control packets protecting at least one part of the associated data packets. In Fig. 6 the data packets and error control packets are transported within different CIFs.

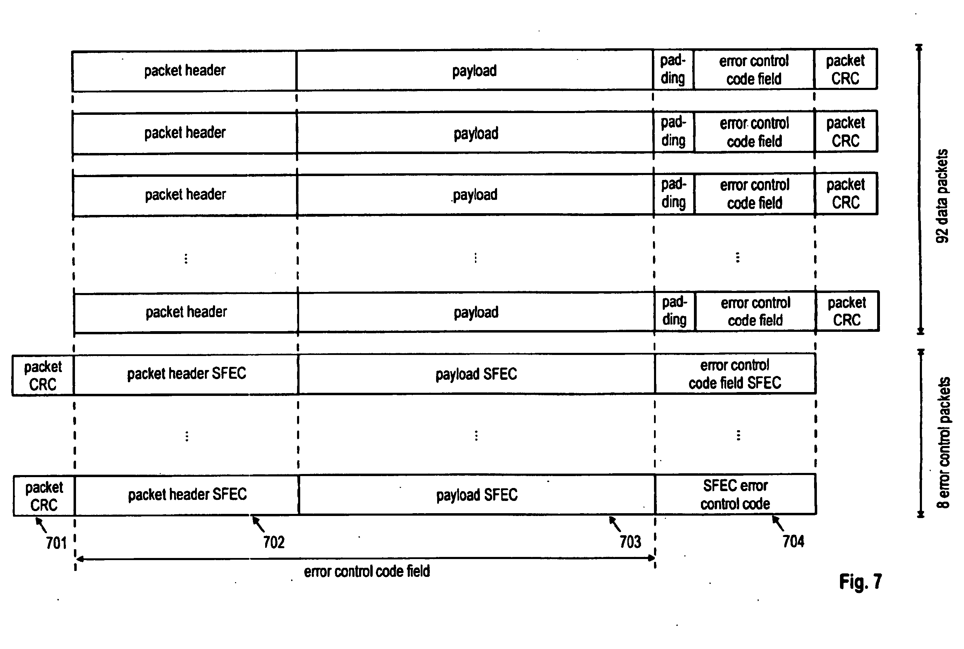

According to another embodiment shown in Fig. 7, a subchannel may for example comprise a capacity of 384 bytes and may use a data packet size of 96 bytes. The error control packets are also 96 bytes long. It should be noted that it may also be possible to use different sized data packets and/or error control packets. In a subchannel according to the example shown in Fig 7, there may be 92 data packets followed by 8 error control packets.

Each error control packet comprises a CRC field 701 providing a CRC sequence calculated on the remaining fields of the packet. The CRC field 701 may be used to verify the data integrity of the error control code data of the error control packets at the receiver.

Further, the error control packet comprises a packet header SFEC (superframe forward error correction) field which has been calculated based on all or a subset of the packet headers of the data packets. Each error control packet used may be built on another subset of packet headers or may use another generator polynomial to calculate the error control code data in the packet header SFEC field 702.

Similarily, the payload SFEC field 703 of an error control packet may be built based on a subset or all payload fields of the data packets. The packet header SFEC field 702 and the payload SFEC field 703 may form an error control field of an error control packet. According to an embodiment of the present invention the data of this error control field may be calculated based on the complete header and payload data of the data packets as indicated in Fig. 7. Alternatively, this field of the error control packet may also only protect one of these data packet fields, i.e. header or payload, or individual parts of these fields only. Hence, in another alternative embodiment, the error control code field of an error control packets may for example be generated on the payload section of data packets and only individual header fields thereof, such as the packet address 307, the useful data length field 309 and/or the packet length field 304.

Same applies to the SFEC error control code 704 which may provide protection for the error control code field of at least a part the error control packet's error control code field. This field may for example be used to verify the integrity of the packet header SFEC field 702 and the payload SFEC field 703 data and may provide redundancy allowing a correction of those fields.

It should be noted that according to one embodiment of the present invention the CRC field 701 of the error control packet precedes the remaining fields. Though theoretically the CRC field may also placed in any other location within the error control packet, locating the CRC field 701 at the error control packet's end may not be feasible, due to adding a correct CRC to the end of the packet may lead to confusions of conventional receivers detecting "data packet" for which integrity is confirmed based on the CRC field. In case the CRC field 701 is for example preceding the remaining fields of the error control packet, a conventional receiver will discard the data since the CRC check for the "data packet" fails. Thus, the proposed subchannel structure and format of error control packets may allow a backward compatible implementation of the present invention since error control packets would be deleted by conventional receivers due to the CRC check failing.

According to another embodiment, the CRC field 701 may also be omitted due to adding an additional SFEC error control code 704 to the error packets may prevent a receiver from detecting a "valid" data packet within the received data. However, the CRC field 701 may also be comprised in the error control packets even if an additional SFEC error control code 704 as a constant packet length of error control packets and data packets may be maintained in an easier way and a CRC check may usually be performed faster than for example a Reed-Solomon decoding process.

In the exemplary embodiment, the data packets may correspond to those shown in Fig. 3 and 4. However it may also be possible to use conventional data packets. In the latter case it may be possible to omit the error control code SFEC field 704 within the error control code packets providing error protection for the error control field of the data packets.

It should be further noted that the superframe structure proposed may comprise a predefined number of the subchannel data for consecutive common interleaved frames (CIF) starting at a predefined CIF count. The CIF count is a consecutive number from 0 to 4999 and carried in the FIG type 0, extension type 0 (FIG 0/0). Each CIF may be marked with a number modulo 5000. The superframe length is a divider of 5000 e.g. 25. The first number is 0. Thus the CIF count marking the start of a superframe is 0, 25, 50, 75 ... 4975. Each superframe may carry data packets and parity packets (in error control packets) of the same length. Assuming that a superframe comprises a predetermined number of data packets followed by a predetermined number of error control packets, the receiver may easily recognize the beginning of each superframe employing the CIF count.

For example, in case a superframe comprises 100 packets (92 data packets and 8 error control packets, each 96 bytes long) and assuming a subchannel capacity of 384 bytes, a superframe would start, i.e. the data packets would be provided, at CIF count n·25 (n=0 to 199). The beginning of the error control packets would be at CIF count n·25+23. The next superfame would start at CIF count (n+1)·25.

The 23 in the CIF count n·25+23 is found as follows: the capacity of the subchannel is 384 bytes. When assuming a packet size of 96 bytes, 4 packets may be accommodated in a single CIF. Hence, it would take 92:4=23 CIFs to transport the 92 data packets. Thus, as the CIF count starts at 0, at the CIFs at CIF count n·25+23 and n·25+24 will comprise the 8 error control packets.

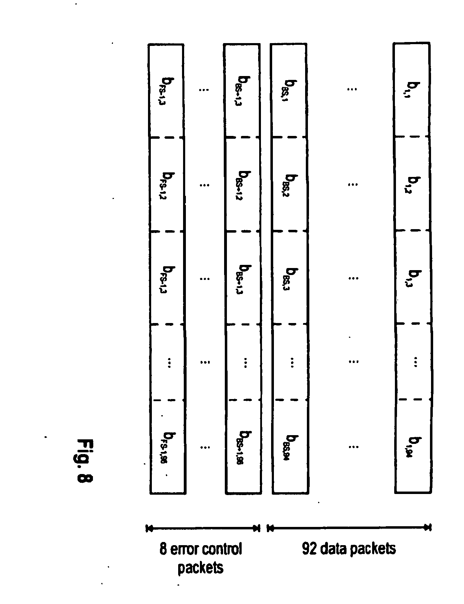

According to another embodiment of the present invention, the error control code data in the different SFEC fields of the error control packets may be computed based on a byte-by-byte basis. This is illustrated in Fig. 8. It should be noted that the data packets and error control packets may comprise a CRC field which is 2 bytes long. As the CRC field of the data packet may not be protected (see also Fig. 7) bytes 1 to 94 of the error data packets are mapped to bytes 3 to 96 of the error control packets.

However, it should become clear from Fig. 7 and 8 that the error control code bytes of the error control packets and the header field, payload and error control code field (and optionally the padding if present) may be represented in a matrix form wherein the information in each column (for example of length one byte) are protected by the error control code data of the error control packets aligned in the same column allowing a simple association of the parity information to the information of the data packets.

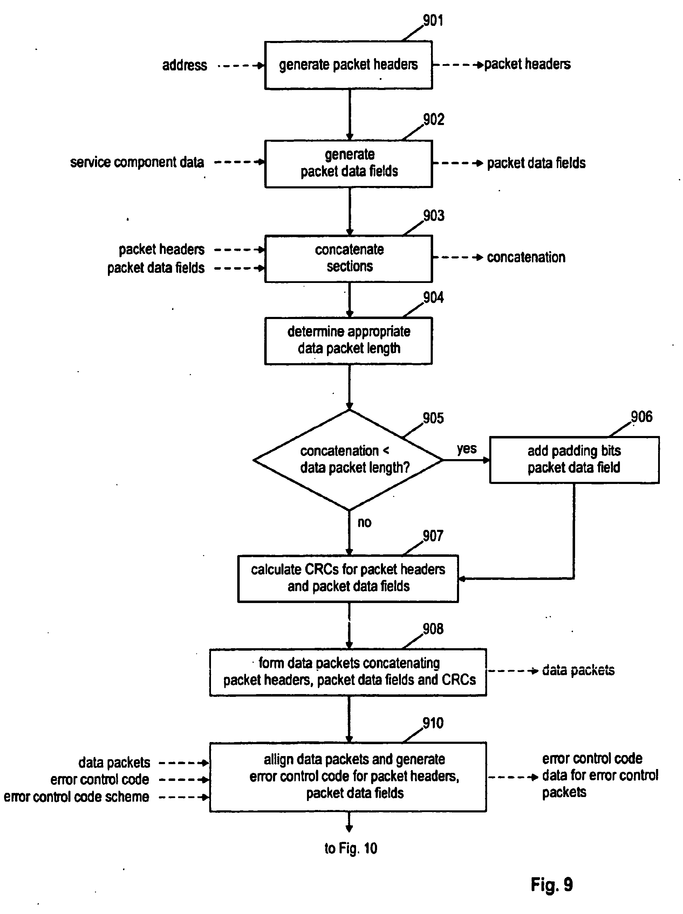

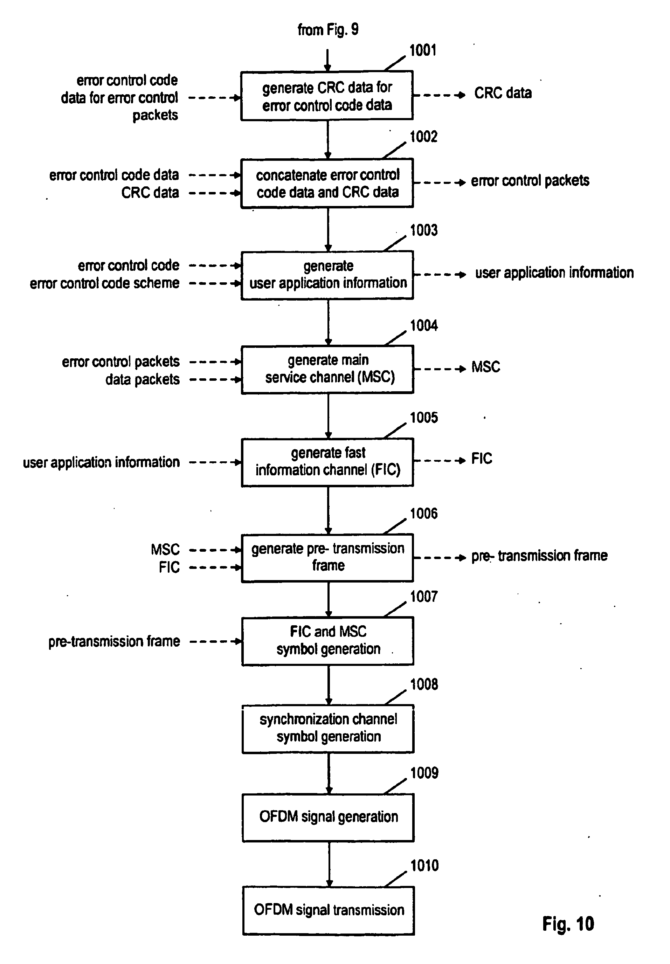

Fig. 9 and 10 show an exemplary flow chart of a transmission process using the proposed superframe structure according to an embodiment of the present invention. It should be noted that the steps shown in the figures are partly optional and need not be performed necessarily. Also the sequence of the steps is not limited to the one illustrated for exemplary purposes in the figures.

In a first step 901, the transmitter generates packet headers for a plurality but predetermined number of data packets belonging to a subchannel. The data packets may correspond to the one shown for example in Fig. 3. Next, the service component data or application data of the subchannnel may be used to generate packet data fields of the data packets in step 902.

If using for example of a packet structure as shown in Fig. 3, an error control code and its corresponding error control code scheme may be used to generate error control code fields for the data packets by applying error control coding to at least a portion of data of each data packet comprised in the data packet's payload and/or at least a part of the packet header. It may be possible to protect only a part of the data of the service component as well as the most relevant part in the packet header. The error control fields for the data packets as well as their lengths result from this generation process. In step 902, the error control field data for each data packet may also be added to the packet data fields of each data packet.

Next, the packet headers and the generated packet data fields may be concatenated in step 903 and the appropriate data packet length from a number of different predetermined data packet lengths may be chosen in step 904. The present embodiment of the invention may use data packets of fixed length such that each data packet has a given packet length.

Further, the transmitter may determine in step 905 whether the concatenation of a packet header and the packet data field would result in the determined given packet length when including a CRC field at its end. If there are not enough bits to fill the complete data packet by including the packet header, the packet data field and the CRC field, the transmitter may add padding bits to packet data field of individual packets to match the data packet length to the appropriate size in step 906.

Once the appropriate length of the packet header and the packet data field has been obtained, a CRC data for the packet headers and the packet data fields may be calculated 907. In the subsequent step 908 data packets may be formed by concatenating the packet headers, the packet data fields and the generated CRC data.

Next, in step 910, the transmitter/broadcast station may generate error control code data for the generated data packets using an error control code and corresponding error control code scheme, for example a RS (100, 92) code. As explained with reference to Fig. 7 or 8 above, these error control code data is generated based on a alignment of the data packets in matrix form, wherein each packet header SFEC field data is calculated based on at least a part of the packet header of the data packets, each payload SFEC field data is calculated based on at least a part of the payload fields of the data packets, etc. The calculation of error control code data of error control packets may be also performed on a byte-by-byte basis as illustrated in Fig. 8.

In Fig. 10, CRCs for the error control code field data generated in step 910 are calculated (see step 1001). The CRC data may be used by the receiver to determine whether the payload of the error control packets, i.e. the error control code data provided have been corrupted during transmission. If so, same may not be used to correct data of corrupted data packets.

Having calculated the CRC field data, the error control packets may be built by a concatenation of the error control code data and the CRCs calculated in step 1002 in order to form error control packets structures as for example illustrated in Fig. 7.

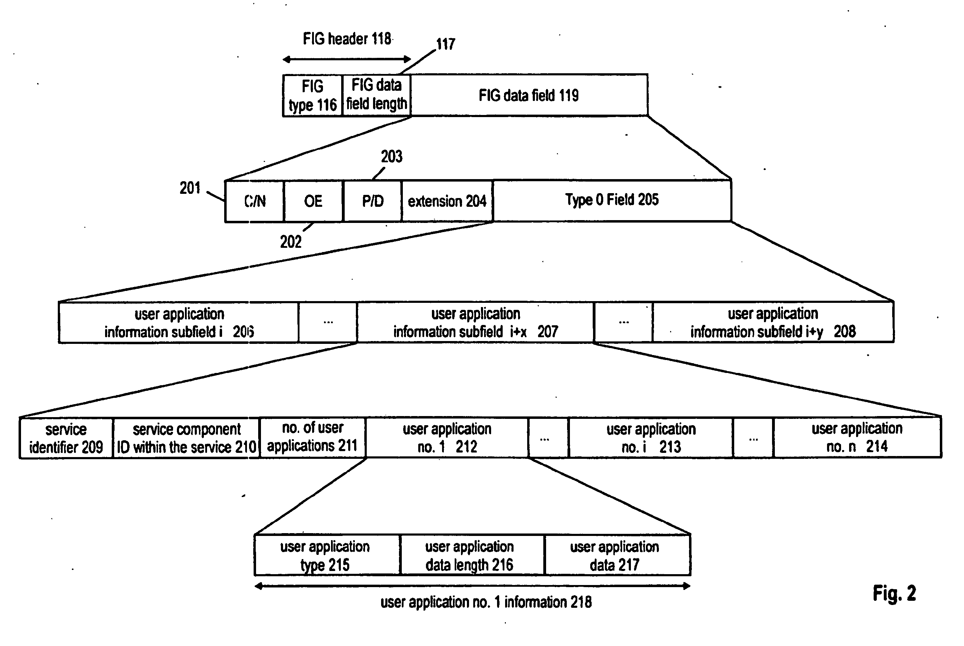

In case, the error control code used to generate the-data-of-the error control packets and its corresponding error control scheme is variable, those parameters are used to generate the data to fill user application information in step 1003. The definition of the user application information will be outlined in one of the following sections in reference to Fig. 2. These user application information may be added to the FIC (see step 1005) to inform the receiver about the error control code and scheme used for generating the data within the error control packets at the broadcasting station.

According to another embodiment, a corresponding mechanism may be further used in case of using different error control codes for generating the error control code field of data packets as illustrated in Fig. 3 or 4. In this case it may also be desirable to signal the used error control code and scheme as well as the length of the error control code field to the receiver.

Further, the data packets and error control packets may be used by a generation process 1004 of the main service channel (MSC). In this step, the different services are multiplied to CIFs forming the main service channel. Thereby, a subchannel structure as illustrated in Fig. 6 or 7 may be generated by providing the data packets and error control packets in the desired sequence for multiplexing them on the MSC.

The data packets and error control packets input to block 1004 are intended to illustrate that in the generation process of the main service channel also the packets generated in steps 908 and 1002 are included into the main service channel.

Further, the user application information may be included in the fast information channel in step 1005 or more generally to an information data stream. In this step, the fast information channel (FIC) is generated. The FIC may among other data (e.g. FIDC, MCI) comprise the relevant signaling of the parameters related to the generation of the error control code field data within the error control packets.

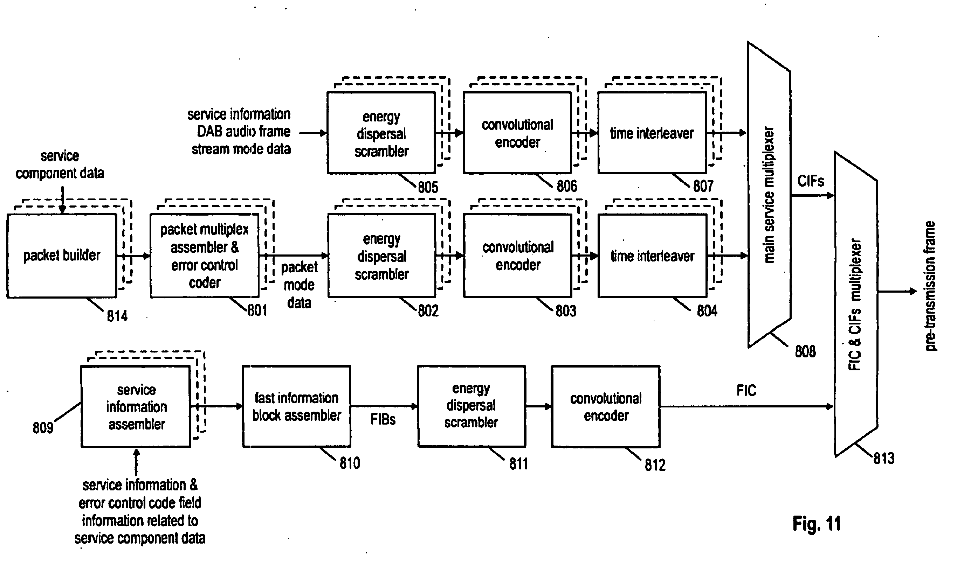

As also illustrated in Fig. 11, the main service channel i.e. the concatenation of CIFs as well as the FIC is multiplexed to generate a pre-transmission frame. Next, the symbols of the pre-transmission frame i.e. the fast information channel and the main service channel are generated in step 1007. To these symbols, the synchronization channel symbols are added in step 1008 to form the symbols of the transmission frame. In step 1009 the OFDM signal of the transmission frame symbol is generated and in step 1010 the OFDM signal is transmitted to the receiver.

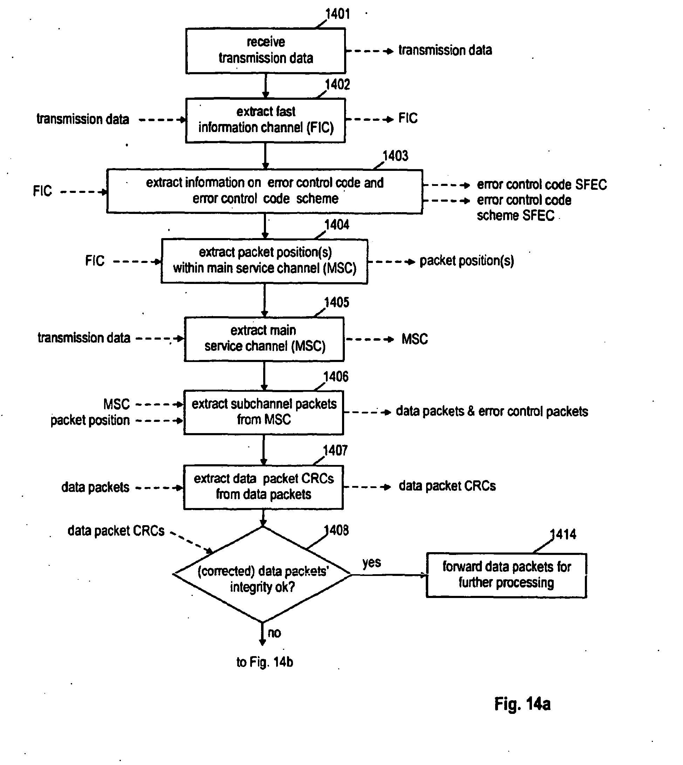

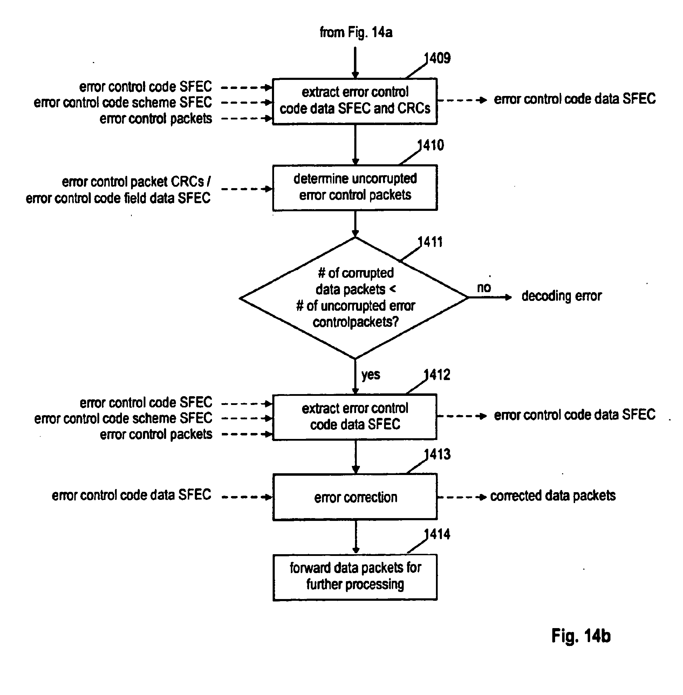

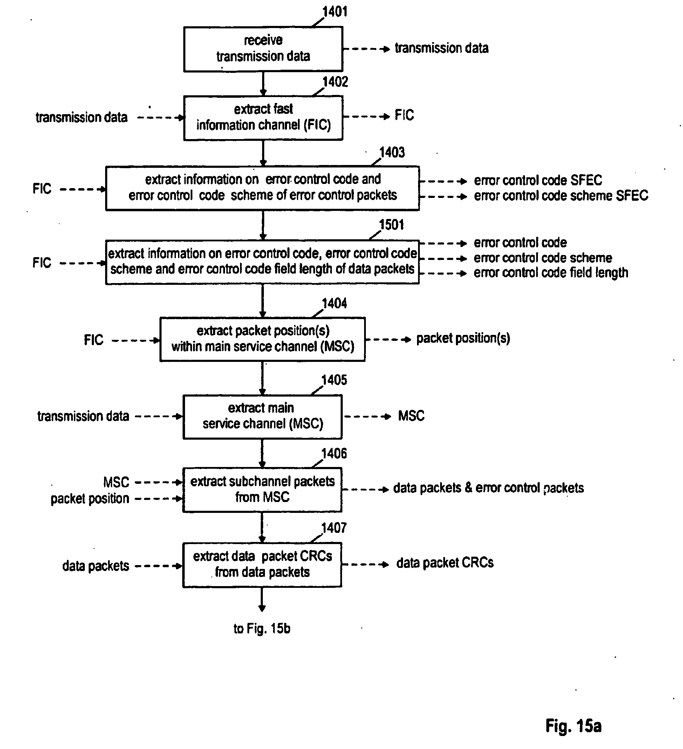

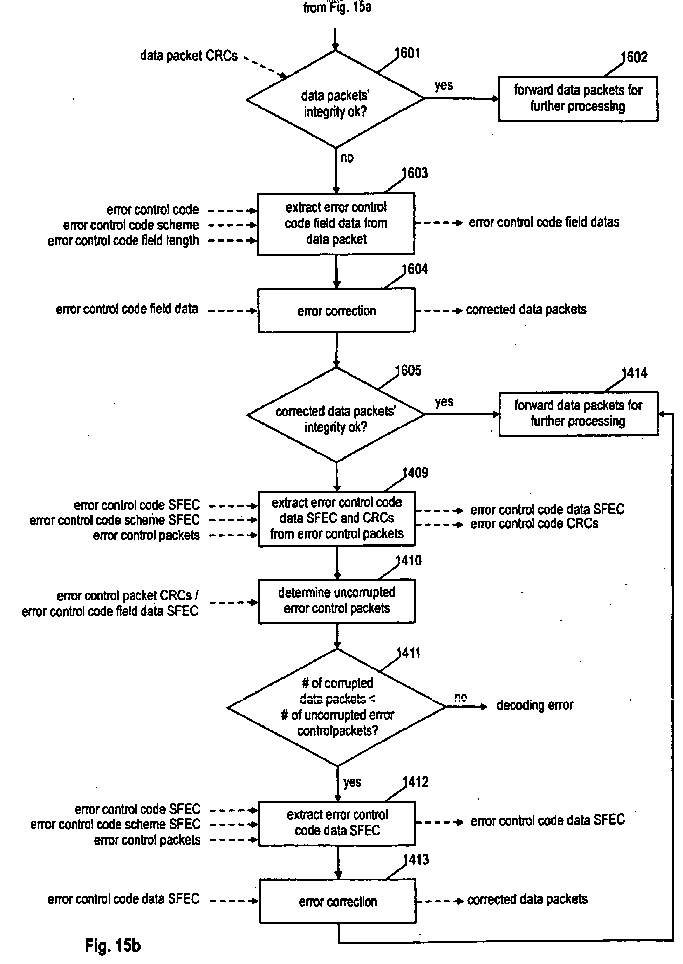

Next, different embodiments of a reception process for receiving a subchannel having a structure according to the present invention are described in the following in reference to Fig. 14a, 14b, 15a and 15b. It should be noted that the steps shown in the figures are partly optional and need not be performed necessarily. Also the sequence of the steps is not limited to the one illustrated for exemplary purposes in the figures.

Fig. 14a shows a flow chart of an exemplary reception method of a subchannel structure comprising a packet-based data stream within a transmission frame according to an embodiment of the present invention. Upon receiving the transmission data from a broadcast station in step 1401, the transmission data is processed and the fast information channel may be extracted therefrom in step 1402. Information on the error control code and the corresponding error control code scheme (error control code SFEC and error control code scheme SFEC) used to generate the error control code data of the error control packets of the proposed superframe structure may be extracted from the fast information channel in step 1403. Further, also the packet position(s), i.e. the position of data packets or error control packets, within the subchannel of the main service channel may be extracted from the fast information channel in step 1404.

Upon having obtained this information, the main service channel may be extracted from the transmission data next in step 1405 and using the packet position information and the extracted main service channel, the data packets for carrying the respective service component as well as the error control packets may be extracted from the main service channel in step 1406.

Having obtained the data packets from the main service channel, their packet CRCs may be extracted therefrom in step 1407. The CRC data may be used in step 1408 to determine, whether individual data packets have been forged during transmission. In case a data packet's integrity is verified, the flow advances to block 1414, where the intact data packet is provided to a further processing instance, e.g. a user application.

In case the integrity of a data packet has not been verified in the CRC check, the error control code data within the error control packets may be used to correct the data packet(s).

If the CRC check for one ore more data packets failed in step 1408, the receiver may try to correct the errors in the data packets using the error control code of the error control packets. In a first step, the data of the SFEC error control code field 704 may be extracted from the error control packets as well as the CRCs therein in step 1409. Based on the extracted information it may be determined in step 1410 which of the error control packets have been successfully received. For example the error control packets' CRCs may be used for this purpose and possible errors in the error control field of the error control packets (see Fig. 7) may be corrected using the SFEC error control code data.

Next, in step 1411, the receiver may determine whether the number of data packets which have been corrupted (and could not be corrected) is smaller than the number of uncorrupted or corrected error control packets. Only if this is the case the error control packets comprise enough redundancy to allow the successful of the corrupted data packets according to the exemplary embodiment of the invention.

Thus if the comparison of the numbers comes to a negative result in step 1411, a decoding error is output, since the corrupted data packets may not be corrected.

If it is found that the number of data packets which have been corrupted (and could not be corrected) is smaller than the number of uncorrupted or corrected error control packets, the data of the error control fields in the uncorrupted or corrected error control packets is extracted in step 1414 and the errors in the corrupted data packets may be corrected in step 1413. The corrected data packets and the successfully received data packets may be forwarded for further processing in step 1414. Please note that blocks 1414 in Fig. 14a and Fig. 14b are identical.

Fig. 15a and 15b show a flow chart of another exemplary reception method of a subchannel structure comprising a packet-based data stream within a transmission frame according to an embodiment of the present invention. In this embodiment, a data packet structure as shown in Fig. 3 may also be used. Hence, each data packet comprises an additional error control code which may correct errors within a packet. To better distinguish between the error control code and scheme and error control code data of data packets and error control packets, the data, used code and used scheme of the error control packets have been marked by appending "SFEC" to information/data corresponding thereto.

Steps 1401 to 1407 of Fig. 15a correspond to those of Fig. 14a. Thus a detailed description will be omitted for brevity. It should be noted however, that in addition to the error control code and scheme information (error control code SFEC and error control code scheme SFEC) for the error control packets also the information on the error control code and scheme as well as the error control code field length of data packets is extracted in step 1501.

Turning now to step 1601 in Fig. 15b, the data packets' integrity is verified using the data packet CRCs extracted from same. If a data packet passes the integrity check same may be forwarded for further processing in step 1602.

In case the integrity of a data packet has not been verified in the CRC check, the information on the error control code and scheme as well as the error control code field length may be used to extract 1603 the error control field data from the data packet. Using the extracted data transmission errors in the received data packet may be corrected in step 1604. Next, the data integrity of the corrected data packet may be checked again in step 1605, which should result in the verification of the data packet's integrity such that the flow proceeds to step 1414.

In case data integrity of the corrected data packet is still not verified, the receiver may try to correct the errors in the data packets using the error control code of the error control packets. As outlined above, the data of the SFEC error control code field 704 may be extracted from the error control packets as well as the CRCs (see step 1409) in order to determine in step 1410 which of the error control packets have been successfully received.

The receiver may then determine 1411 if the number of data packets which have been corrupted (and could not be corrected) is smaller than the number of uncorrupted or corrected error control packets. If the comparison of the numbers comes to a negative result in step 1411, a decoding error is output, since the corrupted data packets may not be corrected.

If it is found that the number of data packets which have been corrupted (and could not be corrected) is smaller than the number of uncorrupted or corrected error control packets, the data of the error control fields in the uncorrupted or corrected error control packets is extracted in step 1414.

Using the extracted data the receiver may correct the errors in the corrupted data packets in step 1413. The corrected data packets and the successfully received data packets may be forwarded for further processing in step 1414.

Next, some principles of transmission formats used within DAB are outlined for exemplary purposes to illustrate how information on the error control code and scheme used to generate the error control data within error control packets and/or data packets may be provided to the receiver according to one embodiment of the present invention.
Fig. 1 illustrates a transmission frame 101 comprising the synchronization channel 102, the fast information channel (FIC) 103 and the main service channel (MSC) 104. The FIC 103 comprises a concatenation of so-called fast information blocks (FIBs) 105, 106. The main service channel 104 is made up of several common interleaved frames (CIFs) 107, 108. Commonly, one to four CIFs are provided depending on the transmission mode.

Each fast information block 105, 106 comprises an FIB data field 109 as well as a CRC field 110. The FIB data field 109 is formed by a concatenation of fast information groups (FIGs) 111, 112, 113 and includes an end marker 114 and padding field 115 at its end. The padding field 115 may be used in case the FIB data field 109 has to be matched to a predetermined length. Each fast information group 111, 112, 113 comprises an FIG header 118 and an FIG data field 119. The FIG header 118 indicates the FIG type 116 as well as the length of data in the FIG data field (FIG data field length 117).

In an exemplary embodiment of the present invention, the service information related to the service component data may be signaled in an "FIG type 0 extension 13" format.

This format is shown in more detail in Fig. 2. It should be noted that it is also possible to define a new FIG type for the provision of the error control code information related to the component service data provided in packet mode and being protected by a superframe structure comprising additional error control code packets. In another embodiment, this field may be used to include error control code information related to the used error control code and scheme applied to the data packets of the subchannel (see for example Fig. 3 and 4)

The FIG header 118 comprises the FIG type field 116 which would be set to zero in the present example. The FIG data field 119 further comprises the C/N flag 201 which may indicate the current version of a multiplex configuration provided in the type zero field, when providing a data base the state of start of the database or the continuation of a database or in case a chain to the database needs to be signaled the current next flag may be used to signal a change event. The OE field 202 may indicate whether the information provided within the fast information group 111, 112, 113 is related to this ensemble or another.

The P/D flag 203 is intended to indicate the length of the service identifier 209 which may for example 16 bits or 32 bits long. The service identifier 209 is for example included in the user application information subfield 206, 207, 208 which will be described in the following sections.

The extension field 204 of the FIG data field 119 indicates the extension used for the type 0 field. In the present example, the extension may be equal to 13. The type 0 field comprises a concatenation of user application information subfield 206, 207, 208 (in case information of several user applications have to be signaled) in the present example.

Each user application information subfield 206, 207, 208 comprises a service identifier 209, to identify the service the user application information relate to, and a service component identifier with the service 210 identifying the service component within the service to which the user application information subfield 206, 207, 208 relates.

The combination of the service identifier 209 and the service component identifier within the service 210 provide a globally valid identifier for a particular service component. Hence, by the combination of these two fields, the data stream provided in packet mode to the receiver as a service component may be explicitly identified.

Following the two identifiers 209, 210, the number of user applications field 211 may indicate the number of applications contained in the subsequent list of user application data 212, 213, 214 (user application no. 1, user application no. i, etc). Each user application field 212, 213, 214 comprises a user application type 215 which identifies the user application to be used to decode the data in the channel identified by the service identifier 209 and the service component identifier within the service 210, as well as a user application data length 216 indicating the length of the user application data field 217. Together, the user application type field 215, the user application data length field 216 and the user application data field 217 form the so-called user application information 218.

In the user application data field, the error control code field information related to the service component data or more specifically to the error control code and its corresponding error control code scheme used to generate the generate a predetermined number of error control packets and optionally - when employing a packets structure according to Fig. 3 or 4 - the error control code scheme used to generate the error control field of the data packets as well as the lengths of this error control code field may be indicated.

By using a different bit combination of an appropriate length, the receiver may distinguish whether for example a Reed-Solomon code or a turbo-code has been used. Another bit combination may indicate the error control code scheme used and another field within the user application data may inform the receiver on the length of the error control field in the error control packets and/or data packets.

The service identifier 209 and the service component identifier within the service 210 mentioned above may identify the service component carrying the user application. The packet address and the sub-channel identifier may be derived from the service component information carried in the fast information channel. The position of the packet in the transmission frame may be derived from the packet address and the sub-channel identifier.

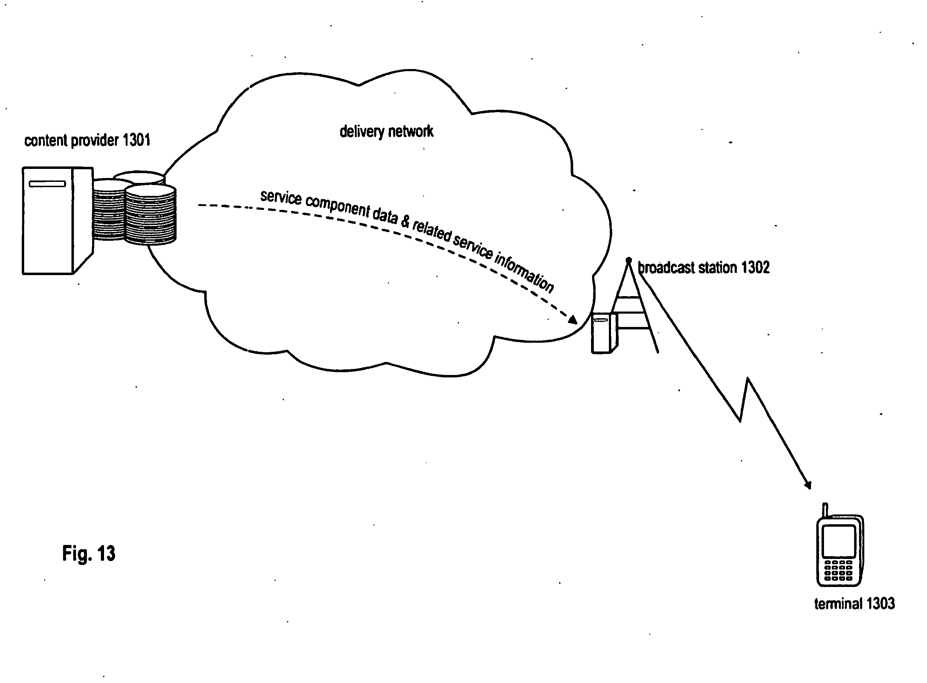

Next, a conceptional DAB mission block diagram according to an embodiment of the present invention is outlined with reference to Fig. 11. For example a content provider 1301 as shown in Fig. 13 provides a service component data and related service information via a broadcast station 1302 to a receiving terminal 1303. The service component data, which may for example multi-media data stream, is input into the packet builder 1114.

The packet builder 1114 collects the different input streams and maps them into data packets. Hence, several service data components of different content providers may be delivered to packet builder 1114. In another embodiment of the present invention the packet builder 1114 may further provide the selection of the appropriate data packet length and error control coding of at least parts of the data packets to generate the information of the error control code field comprised in the data packet. For example, the data packet structure of Fig. 3 may be used. As outlined previously, it may be however feasible to use a constant packet length within a subchannel.

The packet builder 1114 may further assign corresponding packet addresses 307 (see Fig. 3) to the service component data of a single user application instance. Hence, by using different data packet addresses 307, it is possible to distinguish between different user application instances and their related service component data.

The packet multiplex assembler & error control coder 1101 fills an available sub-channel with the data encapsulated in the data packets for the different user application instances making use of packet mode transmission on the sub-channel. Moreover, the multiplex assembler & error control coder 1101 may also generate error control code packets as for example shown in Fig. 7 to provide an additional protection mechanism to a predetermined number of data packets as outlined above. Thus, the multiplex assembler & error control coder 1101 may also be responsible for forming the appropriate subchannel configuration proposed by the present invention.

Further, the packet multiplex assembler & error control coder 1101 may apply different strategies for filling the sub-channel. The application data of the different user application instances may for example be sequentially provided or packets may be provided in parallel for the different user application instances using different packet addresses 307. Further options for packet sequence strategies may be the length and duration of the data bursts in the number of packets of the same address 307 sent in an immediate sequence. In order to support the most proper transmission strategy the packet multiplex assembler & error control coder 1101 may be arranged to prioritize one or more user application instances in their completely or individually file by file. In any case, the packet multiplex assembler & error control coder 1101 maintains the proposed order of a predetermined number of data packets and a predetermined number of error control packet, i.e. maintains the proposed superframe structure.

The packet multiplex assembler & error control coder 1101 output the packet mode data to an energy dispersal scrambler 1102. The energy dispersal scrambler 1102 provides a deterministic selective complementing of bits in logical frame intended to reduce the possibility that systematic patterns result in unwanted regularity in the transmitted signal. The scrambled packet mode data is convolutional encoded in convolutional encoder 1103 and is interleaved in time interleaver 1104. The interleaved data is then multiplexed in the main service multiplexer 1108 with data of the upper branch shown in Fig. 11 which will be described next.

Digital audio broadcasting may be capable of delivering various data types from the transmitter to the receiver. The upper branch in Fig. 11 is intended to summarize the other possible services that may be carried by DAB. For example, also service information, DAB audio frame and stream mode data may be scrambled in energy dispersal scrambler 1105, corresponding in its functionality to energy dispersal scrambler 1102. The scrambled data is encoded in convolutional encoder 1106 and the encoded data is interleaved in time interleaver 1107. The time interleaved data is then multiplexed with the scrambled, encoded and interleaved packet mode data in main service multiplexer 1108 to form common interleaved frames (CIFs).

The CIFs are the serial digital output from the main service multiplexer 1108 which is contained in the main service channel part of the transmission frame. Taking the transmission system as an example, the common interleaved frame is common to all transmission modes and comprises 55 296 bits i.e. 768 capacity units.

Next, the lower branch shown in Fig. 11 will be described in more detail. A second possibility to provide service information i.e. auxiliary information about services such as service label and program type codes to the receiver the service information may be closer in the lower branch 1109, 1110, 1111 and 1112 of Fig. 11. Also the service information related to the service component data inputted to packet multiplex assembler & error control coder 1101 is provided to the service information assembler 1109. The service information assembler 1109 assembles the service information at its input to the Fast Information Groups (FIG) which is output to the fast information block assembler 1110. The fast information block assembler 1110 collects the different FIGs provided in the fast information channel (FIC) of the digital audio broadcasting system. Using the example of DAB service information multiplex control information (MCI) as well as the fast information data channel (FIDC) may provide input to the fast information block assembler 1110.

The multiplex configuration information (MCI) may be information defining the configuration of the multiplex in the main service channel. The multiplex configuration information may contain the current details about the services, service components and sub-channel and the linking between these objects in the main service channel. In case of an imminent reconfiguration the forthcoming details about services, service components and sub-channels and the linking between these objects may additionally be provided in the multiplex configuration information.

The MCI may be carried in the fast information channel in order that a receiver may interpret this information in advance of the service components stored in the MSC. It may also include identification of the ensemble and a date and a time marker.

The fast information block assembler 1110 output is a concatenation of fast information blocks (FIBs), as for example shown in Fig. 1. The FIBs may be scrambled in energy dispersal scrambler 1111 and may be convolutional encoded in encoder 1112 to form the so-called fast information channel (FIC). The fast information channel and the common interleaved frame may be a multiplier in the FIC & CIFs multiplexer 1113 to output a pre-transmission frame. The term "pre-transmission frame" is used in this context in order to indicate that a complete transmission frame further comprises the synchronization channel, as for example shown in the transmission frame structure of Fig. 1.

For the transport of sensitive content to portable and mobile devices DAB may be more efficient than the recently developed DVB-H System due to an independent convolutional coding for each sub-channel, and due to processing just the relevant part of the multiplex instead of processing of the whole multiplex requires lower receiver performance ("advanced time slicing"). Further, DAB is also applicable to mobile environments up to speeds of 400 km/h without any degradation of the data rate. Further, a differential modulation (DQPSK) requires as in DAB lower Receiver performance than coherent channel estimation for DVB-T, DVB-H. DAB also allows for unlimited size of Single Frequency Networks (SFN) while DVB-H SFN limits the size of the SFN in the order of 200 km.

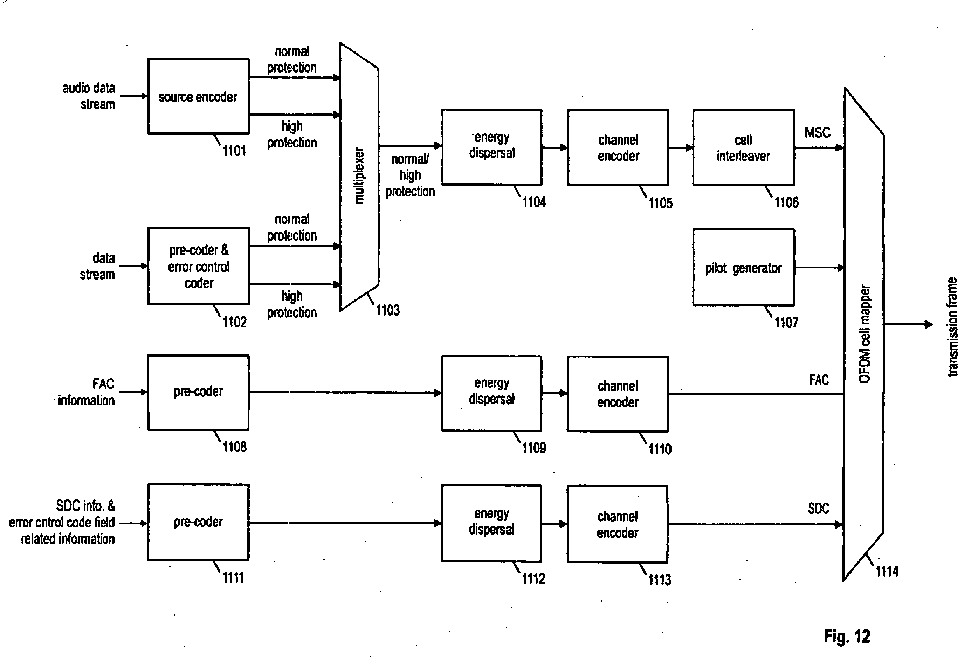

Further, according to another embodiment of the present invention the principles and ideas underlying the present invention may also be applied to the broadcasting system DRM (Digital Radio Mondiale). The following sections will briefly outline the conceptual transmission of data in DRM (see Fig. 12) as well as present a new DRM data packet structure (see Fig. 4).

The conventional Digital Radio Mondiale (DRM) uses the similar transport mechanism to deliver content as a conventional DAB system. The DRM system is designed to be used at any frequency below 30 MHz, i.e. within the long wave, medium wave and short wave broadcasting bands, with variable channelization constraints and propagation conditions throughout these bands.

Figure 12 shows a novel conceptual DRM emission block diagram according to an embodiment of the present invention, which describes the general flow of different classes of information (audio, data, etc.) and does not differentiate between different services that may be conveyed within one or more classes of information.

The source encoder 1201 and pre-coders 1208, 1211 ensure the adaptation of the input streams onto an appropriate digital transmission format. For the case of audio source encoding, this functionality includes audio compression techniques. The output of the source encoder(s) 1201 and the data stream pre-coder 1202, 1208, 1211 may comprise two parts requiring different levels of protection within the subsequent channel encoder. All services have to use the same two levels of protection.

The pre-coder & error control coder 1202 ensure the adaptation of the input streams onto an appropriate digital transmission format, inter alia mapping the data streams into data packets. According to an embodiment of the present invention, the pre-coder & error control coder 1202 may further generate error control packets according to the methods described above and add same to the packet stream.

Moreover, in another embodiment of the present invention the pre-coder & error control coder 1202 may perform an error control coding of the at least a part of the application data and/or the generated packet headers and forms error control packets having a structure as for example depicted in Fig. 7. The pre-coder & error control coder 1202 may also provide the information of the error control code and scheme which may be signaled to the receiver.

The multiplexer 1203 may combine the protection levels of all data and audio services. The energy dispersal 1204, 1209, 1212 provides a deterministic selective complementing of bits in order to reduce the possibility that systematic patterns result in unwanted regularity in the transmitted signal.

The channel encoder 1205, 1210, 1213 adds redundant information as a means for quasi error-free transmission and defines the mapping of the digital encoded information onto QAM cells.

Cell interleaving 1206 spreads consecutive QAM cells onto a sequence of cells quasi-randomly separated in time and frequency, in order to provide robust transmission in time-frequency dispersive channels. The pilot generator provides means to derive channel state information in the receiver, allowing for a coherent demodulation of the signal.

The OFDM cell mapper 1214 collects the different audio stream and data stream classes together with the Fast Access Channel (FAC) and the Service Description Channel (SDC) of cells and places them on the time-frequency grid. The OFDM signal generator may transform each ensemble of cells with same time index to a time domain representation of the signal. Consecutively, the OFDM symbol may be obtained from this time domain representation by inserting a guard interval as a cyclic repetition of a portion of the signal.

A modulator converts the digital representation of the OFDM signal into the analogue signal in the air. This operation involves digital-to-analogue conversion and filtering that have to comply with spectrum requirements.

The data streams may consist of a packet delivery system called Packet Mode. The packet delivery system allows the delivery of asynchronous streams and files for various services in the same data stream and allows the bit rate of the (synchronous) data stream to be shared on a frame-by-frame basis between the various services.

Services may be carried by a series of single packets or as a series of data units. A data unit is a series of packets that are considered as one entity with regard to error handling - one received erroneous packet within a data unit causes the whole data unit to be rejected. This mechanism can be used to transfer files and also to allow simpler synchronization of asynchronous streams.

As outlined previously the principles underlying the present invention may also be applied to DRM systems using a conventional packet structure or an advanced packets structure as shown for example in Fig. 4. The proposed DRM data packet structure comprises a packet header 401, a packet data field 402 and a packet CRC 403. Again, the data packet length may be predetermined. In contrast to DAB (see Fig. 3), the packet length is not signaled in a separate header field (see packet length field 304) but may be signaled to the receiver in the Service Description Channel (SDC), for example in the format defined as application information data - type 5 in the DRM specification "Digital Radio Mondiale; System Specification" (ETSI ES 201 980, available at http://www.etsi.org).

It should be noted that in contrast to the definitions of the packet header and the packet data field in the DRM standard, according to the present invention, their definition is slightly different. According to an embodiment of the invention, the useful data length field 409 indicating the length of the useful data field 410 is considered to be part of the packet header 401 as it may be present in all data packets due to the introduction of the error control code field 412 to the packet data field 402 (see paragraphs below for more details).

The first/last flags 406 and the continuity index 405 correspond to the respective first/last flags 306 and the continuity index 305 of the DAB data packet structure shown in Fig. 3 in their functionality. The packet ID 407 corresponds to the address field 307 in the DAB packet structure of Fig. 3.

In a conventional DRM data packet, the PPI (Padded Packet Indicator) indicates whether the data packet comprises a useful data length field in its packet data field. If no padding is present no useful data length field is present in the packet data field and the packet data field only comprises a payload section.

According to this embodiment, the new DRM packet structure of Fig. 4 comprises a useful data field 410 and an error control code field 412 in its packet data field 402. Hence, the PPI flag 404 may indicate that "padding" is present for all data packets using the proposed packet structure.

In a further embodiment of the present invention, all data packets using this structure may omit the PPI flag 404 in the packet header 401, as all data packets may comprise a useful data field 410 and an error control code field 412 such that the useful data length field 409 will be present in all data packets.

Independent of the two embodiments above, the packet data field 402 may also include a padding field 411 in case the desired total length of the fixed sized data packet is not reached when considering the packet header length, the useful data field length, the error control code field length and the packet CRC length. Hence, by adding a padding field in this case, the total data packet length may be matched to the desired length.

As described in the embodiments related to the DAB implementation issues, the error control code word may introduce error correcting capabilities to the DRM system improving the reliability of data delivery (in terms of the achieved BER) when employing the proposed packet structure. Again, the introduction of the new error control code field 412 to the data packet structure allows a backwards-compatible implementation.

If the error control code and its corresponding scheme as well as the error control code field length are constant no additional signaling of these parameters may be necessary. In case of a more flexible implementation providing the freedom to choose the error control code and scheme used and optionally also the error control code field length, the parameters may be signaled to the receiver, as for the DAB related embodiments described above.

In contrast to the exemplary DAB implementations above, the DRM provides a Fast Access Channel (FAC) for providing the multiplex structure on the MSC, and a Service Description Channel (SDC) for signaling data related to the services provided in the MSC. Hence, the two channels together are comparable to the FIC in DAB.

As a consequence, the error control code field data related information, such as the error control code and scheme used to generate the error control code data in the error control packets (and optionally also in the data packets) may be signaled to the receiver through the SDC using for example the above mentioned application information data entity - type 5. Alternatively another data type may be defined for signaling of this information as well.

In the previous sections, the ideas and principles have been described with respect to a suggested superframe structure for an individual subchannel in a digital audio broadcasting system. The data packets and error control packets combined to form the subchannel structure have been defined in the various embodiments above mainly with respect to the packet structures shown in Fig. 3, 4, 5 and 7. As illustrated in Fig. 3 and Fig. 4, the data packets may be provided with an error control field 312, 412 which may allow the correction of errors in the respective data packets. This may also be referred to as an inner error control coding scheme since each data packet is individually protected by adding additional information suitable to allow not only error detection but also may allow error correction.

The provision of the proposed subchannel structure may be referred to as an outer error control coding scheme as it provides additional error correction data in separated error control packets multiplexed together with the data packets to form the proposed subchannel structure. Thus, the predetermined number of error control packets "appended" to a predetermined number of data packets may provide an erasure protection scheme for the data packets, as for example described in the European patent EP 0 323 606 B1. The outer error control coding scheme may thereby be independent of the presence of and/or the type of inner error control code scheme chosen.

According to another exemplary embodiment, the following inner error control coding scheme may also be used. This scheme does not provide each of the data packets with an error control code field 312, 412 (see Fig. 3 and Fig. 4). Instead, for example data blocks of a predetermined number of bytes of payload data of the application provided in a subchannel, e.g. 188 bytes, may be formed. The payload data of the application may be transmitted in conventional data packets, for example 3 data packets for 188 bytes - depending on the data packet size chosen.

Further, error control code bytes may be calculated based on the payload data blocks and these error control data may be transmitted subsequent to the data packets accommodating the payload data. For example, a new packet format which may comprise the error control data calculated and a synchronization byte to detect their location within the data stream may be used. Since the receiver knows that after the predetermined number of data packets one or more of the packets comprising the error control data follow in the stream it may detect the synchronization byte and extract the error control code data for the associated application data block provided in the preceding data packets.

When using the inner error control coding scheme as outlined in this embodiment, the principles of the present invention may also be applied. Similar to the superframe structure outlined above, same may be defined as a set of o predetermined number of data packets (and packets providing error control data for the application data blocks) followed by/following a predetermined number of error control packets for providing the outer error control coding scheme. It may be feasible to calculate the error control code data of the error control codes based on at least a part of the data packets, i.e. to provide no protection of the packets providing error control data for the application data blocks. Error detection and correction of data packets may be performed according to the principles outlined with respect to Fig. 14a, 14b or Fig. 15a, 15b.

Another embodiment of the present invention relates to the implementation of the above described various embodiments using hardware and software. It is recognized that the various above mentioned methods as well as the various logical blocks, modules, circuits described above may be implemented or performed using computing devices, as for example general purpose processors, digital signal processors (DSP), application specific integrated circuits (ASIC), field programmable gate arrays (FPGA) or other programmable logic devices, etc. The various embodiments of the present invention may also be performed or embodied by a combination of these devices.

Further, the various embodiments of the present invention may also be implemented by means of software modules which are executed by a processor or directly in hardware. Also a combination of software modules and a hardware implementation may be possible. The software modules may be stored on any kind of computer readable storage media, for example RAM, EPROM, EEPROM, flash memory, registers, hard disks, CD-ROM, DVD, etc.

## Claims

1. A subchannel structure within a main service channel in a digital audio broadcasting system for transmitting data of at least one application, the subchannel structure comprising:
a predetermined number of data packets, wherein each data packet comprises
a header enabling the identification of an associated application and the length of a packet data field, and
the packet data field comprising a field with application data of said identified application, and
the subchannel structure further comprising:
a predetermined number of error control packets, wherein each of the error control packets comprises
an error control code field, wherein the data of the error control field is generated based on at least a part of the packet data field and/or at least a part of the packet header of said data packets and
a CRC field preceding the said error control code field for protecting same.

2. The subchannel structure according to claim 1, wherein the data packets and the error control packets are of predetermined length.

3. The subchannel structure according to claim 2, wherein individual bytes of data packets and error control packets are representable in matrix form,
wherein each row of the matrix comprises
the bytes of a data packet for which the data of said error code field have been generated or
error control code bytes of said data of said error control code field of an error control packet, and
wherein each of the error control bytes of each column of the matrix is generated based on the bytes of the data packets in said column.

4. The subchannel structure according to one of claims 1 to 3, wherein the packet data field of said data packet further comprises an error control code field generated based on at least a part of the packet data field and/or at least a part of the packet header.

5. The subchannel structure according to claim 1 or 4, wherein the data of said error control code field in said error control packets and/or said data packets constitute error control code data generated using a Reed-Solomon code or a turbo code or another forward error correction code.

6. A method for transmitting data of at least one application within a subchannel structure of packets in a digital audio broadcasting system, the method comprising the steps of:
forming a predetermined number of data packets, wherein each of the data packets is formed by concatenating a packet header enabling the identification of an associated application and the length of application data in a packet data field, and a packet data field comprising a field with said application data of the associated application,
forming a predetermined number of error control packets, wherein each of the error control packets is formed by concatenating an error control code field, the data of which is generated based on at least a part of the packet data field and/or at least a part of the packet header and a CRC field preceding the said error control code field for protecting same,
forming a subchannel structure by a concatenation of said data packets and said error control packets,
generating a sequence of transmission frames comprising said formed subchannel structure, and
transmitting said transmission frames.

7. The method according to claim 6, wherein the data packets and the error control packets are of predetermined length.

8. The method according to claim 7, wherein individual bytes of data packets and error control packets are representable in matrix form,
wherein each row of the matrix comprises
the bytes of a data packet for which the data of said error code field have been generated or
error control code bytes of said data of said error control code field of an error control packet, and
the method further comprises the step of generating each of the error control bytes of each column of the matrix based on the bytes of the data packets in said column.

9. The method according to one of claims 6 to 8, wherein the packet data field of each data packet further comprises an error control code field generated based on at least a part of the packet data field and/or at least a part of the packet header.

10. The method according to claim 6, further comprising the step of generating said data of said error control code field of said error control packet and/or said data packet using a Reed-Solomon code or a turbo code or another forward error correction code.

11. The method according to claim 10, further comprising the step of transmitting information on the used error control code to generate the data of said error control code field of the error control packets and/or the data packets and the corresponding at least one error control code scheme in an information data stream being part of the transmission frame.

12. A method for receiving a packet-based data stream of at least one application in a digital audio broadcasting system, the method comprising the steps of:
receiving a transmission signal comprising said data stream,
extracting at least one transmission frame comprising said data stream from the transmission signal,
extracting a main service channel from the transmission frame ,
extracting a subchannel structure comprising a concatenation of a predetermined number of data packets and a predetermined number of error control packets from the main service channel, wherein each of the error control packets comprises error control code data protecting at least one part of said data packets and a CRC field preceding the said error control code field for protecting same and wherein each of the data packets comprises a CRC field,
verifying the data integrity of said data packets using said CRC field, wherein data packets of which data integrity is not confirmed are marked, and
correcting errors in said marked data packets using at least one of said error control packets.

13. The method according to claim 12, wherein each data packet further comprises error control code data and an error control code field, and
the method further comprises the step of correcting errors in a data packet using said error control code data of the data packet and
wherein the data packet is marked if the errors can not be corrected using said error control code data of the data packet.

14. The method according to claim 12 or 13, wherein the data packets and the error control packets are of predetermined length.

15. The method according to one of claims 12 to 14, wherein each data packet comprises:
a packet header enabling the identification of an associated application and the length of application data in a packet data field, and
a packet data field comprising a field with said application data of the associated application,
and wherein each error control packet comprises:
an error control code field, the data of which is generated based on at least a part of the packet data field and/or at least a part of the packet header and
a CRC field preceding the said error control code field for protecting same.

16. The method according to claim 15, further comprising the steps of:
verifying the data integrity of said error control code field of each error control packet and
using only those error control code packets for correcting said marked data packets for which data integrity is verified.

17. The method according to claim 15 or 16, wherein individual bytes of data packets and error control packets are representable in matrix form,
wherein each row of the matrix comprises
the bytes of a data packet for which the data of said error code field have been generated or
error control code bytes of said data of said error control code field of an error control packet, and
the method further comprises the step of using the error control bytes of each column to correct a byte of at least one marked data packet in said column.

18. The method according to one of claims 12 to 17, further comprising the steps of:
extracting an information data stream from the transmission frame and
extracting from the information data stream information on the at least one applied error control code and an at least one corresponding error control code scheme used to generate the error control code data in said error control packets and/or said data packets.

19. A broadcast station for transmitting data of at least one application within a subchannel structure of packets in a digital audio broadcasting system, the broadcast station comprising:
processing means for forming a predetermined number of data packets, wherein each of the data packets is formed by concatenating a packet header enabling the identification of an associated application and the length of application data in a packet data field, and a packet data field comprising a field with said application data of the associated application,
wherein the processing means is further adapted to form a predetermined number of error control packets, wherein each of the error control packets is formed by concatenating an error control code field, the data of which is generated based on at least a part of the packet data field and/or at least a part of the packet header and a CRC field preceding the said error control code field for protecting same,
to form a subchannel structure by a concatenation of said data packets and said error control packets, and
to generating a transmission frame comprising said formed subchannel structure, and
a transmitter for transmitting said transmission frame.

20. The broadcast station according to claim 19, further comprising means adapted to perform the method according to one of claims 6 to 11.

21. A terminal for receiving a packet-based data stream of at least one application in a digital audio broadcasting system, the terminal comprising:
a receiver for receiving a transmission signal comprising said data stream,
processing means for extracting at least one transmission frame comprising said data stream from the transmission signal,
wherein the processing means is adapted to extract a main service channel from the transmission frame , and
to extract a subchannel structure comprising a concatenation of a predetermined number of data packets and a predetermined number of error control packets from the main service channel, wherein each of the error control packets comprises error control code data protecting at least one part of said data packets and a CRC field preceding the said error control code field for protecting same and wherein each of the data packets comprises a CRC field,
verification means for verifying the data integrity of said data packets using said CRC field, wherein data packets of which data integrity is not confirmed are marked, and
error correction means for correcting errors in said marked data packets using at least one of said error control packets.

22. The terminal according to claim 21, further comprising means adapted to perform the method according to one of claims 12 to 18.

23. A digital audio broadcast system for transmitting data of at least one application within a subchannel structure of packets according to one of claims 1 to 5.

24. A computer-readable medium for storing instructions that, when executed on a processor, cause the processor to transmit data of at least one application within a subchannel structure of packets in a digital audio broadcasting system by:
forming a predetermined number of data packets, wherein each of the data packets is formed by concatenating a packet header enabling the identification of an associated application and the length of application data in a packet data field, and a packet data field comprising a field with said application data of the associated application,
forming a predetermined number of error control packets, wherein each of the error control packets is formed by concatenating an error control code field, the data of which is generated based on at least a part of the packet data field and/or at least a part of the packet header and a CRC field preceding the said error control code field for protecting same,
forming a subchannel structure by a concatenation of said data packets and said error control packets,
generating a transmission frame comprising said formed subchannel structure, and
transmitting said transmission frame.

25. The computer readable medium according to claim 24, further storing instructions that when executed by the processor cause the performance of the method steps according to one of claims 6 to 11.

26. A computer-readable medium for storing instructions that, when executed on a processor, cause the processor to receive a packet-based data stream of at least one application in a digital audio broadcasting system by:
receiving a transmission signal comprising said data stream,
extracting at least one transmission frame comprising said data stream from the transmission signal,
extracting a main service channel from the transmission frame ,
extracting a subchannel structure comprising a concatenation of a predetermined number of data packets and a predetermined number of error control packets from the main service channel, wherein each of the error control packets comprises error control code data protecting at least one part of said data packets and a CRC field preceding the said error control code field for protecting same and wherein each of the data packets comprises a CRC field,
verifying the data integrity of said data packets using said CRC field, wherein data packets of which data integrity is not confirmed are marked, and
correcting errors in said marked data packets using at least one of said error control packets.

27. The computer readable medium according to claim 24, further storing instructions that when executed by the processor cause the performance of the method steps according to one of claims 12 to 18.

## Patentansprüche

1. Unterkanal-Struktur (Subchannel Structure) mit einem Haupt-Dienstkanal (Main Service Channel) in einem DAB (Digital Audio Broadcasting)-System zum Senden von Daten wenigstens einer Anwendung, wobei die Unterkanal-Struktur umfasst:
eine vorgegebene Anzahl von Datenpaketen, wobei jedes Datenpaket umfasst:
einen Header, der die Identifizierung einer zugehörigen Anwendung und der Länge eines Paketdaten-Feldes ermöglicht, und
das Paketdaten-Feld, das ein Feld mit Anwendungsdaten der identifizierten Anwendung umfasst, und
wobei die Unterkanal-Struktur des Weiteren umfasst:
eine vorgegebene Anzahl von Fehlerüberwachungs-Paketen, wobei jedes der Fehlerüberwachungs-Pakete umfasst:
ein Fehlerüberwachungscode-Feld, wobei die Daten des Fehlerüberwachungs-Feldes auf Basis wenigstens eines Teils des Paketdaten-Feldes und/oder wenigstens eines Teils des Paket-Headers-der Datenpakete-erzeugt werden, und
ein CRC-Feld, das dem Fehlerüberwachungscode-Feld vorangeht, um dieses zu schützen.

2. Unterkanal-Struktur nach Anspruch 1, wobei die Datenpakete und die Fehlerüberwachungs-Pakete vorgegebene Länge haben.

3. Unterkanal-Struktur nach Anspruch 2, wobei einzelne Bytes von Datenpakten und Fehlerüberwachungs-Paketen in Matrixform dargestellt werden können, und jede Reihe der Matrix umfasst:
die Bytes eines DatenPaketes, für das die Daten des Fehlercode-Feldes erzeugt worden sind, oder
Fehlerüberwachungscode-Bytes der Daten des Fehlerüberwachungscode-Feldes eines Fehlerüberwachungs-Paketes, und
wobei jedes der Fehlerüberwachungs-Bytes jeder Spalte der Matrix auf Basis der Bytes der Datenpakete in der Spalte erzeugt wird.

4. Unterkanal-Struktur nach einem der Ansprüche 1 bis 3, wobei das Paketdaten-Feld des Datenpaketes des Weiteren ein Fehlerüberwachungscode-Feld umfasst, das auf Basis wenigstens eines Teils des Paketdaten-Feldes und/oder wenigstens eines Teils des Paket-Headers erzeugt wird.

5. Unterkanal-Struktur nach Anspruch 1 oder 4, wobei die Daten des Fehlerüberwachungscode-Feldes in den Fehlerüberwachungs-Paketen und/oder den Datenpaketen Fehlerüberwachungscode-Daten bilden, die unter Verwendung eines Reed-Solomon-Codes oder eines Turbo-Codes oder eines anderen Vorwärtsfehlerkorrektur-Codes erzeugt werden.

6. Verfahren zum Senden von Daten wenigstens einer Anwendung innerhalb einer Unterkanal-Struktur (Subchannel Structure) von Paketen in einem DAB-System, wobei das Verfahren die folgenden Schritte umfasst:
Bilden einer vorgegebenen Anzahl von Datenpaketen, wobei jedes der Datenpakete durch Verketten eines Paket-Headers, der die Identifizierung einer zugehörigen Anwendung und der Länge von Anwendungsdaten in einem Paketdaten-Feld ermöglicht, und eines Paketdaten-Feldes, das ein Feld mit den Anwendungsdaten der zugehörigen Anwendung umfasst, gebildet wird,
Bilden einer vorgegebenen Anzahl von Fehlerüberwachungs-Paketen, wobei jedes der Fehlerüberwachungs-Pakete durch Verketten eines Fehlerüberwachungscode-Feldes, dessen Daten auf Basis wenigstens eines Teils des Paketdaten-Feldes und/oder wenigstens eines Teils des Paket-Headers erzeugt werden, und eines CRC-Feldes, das dem Fehlerüberwachungscode-Feld vorangeht, um dieses zu schützen, gebildet wird,
Bilden einer Unterkanal-Struktur durch eine Verkettung der Datenpakete und der Fehlerüberwachungs-Pakete,
Erzeugen einer Sequenz von Sende-Frames, die die ausgebildete Unterkanal-Struktur umfasst, und
Senden der Sende-Frames.

7. Verfahren nach Anspruch 6, wobei die Datenpakete und die Fehlerüberwachungs-Pakete vorgegebene Länge haben.

8. Verfahren nach Anspruch 7, wobei einzelne Bytes von Datenpaketen und Fehlerüberwachungs-Paketen in Matrixform dargestellt werden können,
und jede Reihe der Matrix umfasst
die Bytes eines Datenpaketes, für das die Daten des Fehlercode-Feldes erzeugt worden sind, oder
Fehlerüberwachungscode-Bytes der Daten des Fehlerüberwachungscode-Feldes eines Fehlerüberwachungs-Paketes, und
wobei das Verfahren des Weiteren den Schritt des Erzeugens der Fehlerüberwachungs-Bytes jeder Spalte der Matrix auf Basis der Bytes der Datenpakte in der Spalte umfasst.

9. Verfahren nach einem der Ansprüche 6 bis 8, wobei das Paketdaten-Feld jedes Datenpaketes des Weiteren ein Fehlerüberwachungscode-Feld umfasst, das auf Basis wenigstens eines Teils des Paketdatenfeldes und/oder wenigstens eines Teils des Paket-Headers erzeugt wird.

10. Verfahren nach Anspruch 6, das des Weiteren den Schritt des Erzeugens der Daten des Fehlerüberwachungscode-Feldes des Fehlerüberwachungs-Paketes und/oder des Datenpaketes unter Verwendung eines Reed-Solomon-Codes oder eines Turbo-Codes oder eines anderen Vorwärtsfehlerkorrektur-Codes umfasst.

11. Verfahren nach Anspruch 10, das des Weiteren den Schritt des Sendens von Informationen über die zum Erzeugen der Daten des Fehlerüberwachungscode-Feldes der Fehlerüberwachungs-Pakete und/oder der Datenpakete verwendeten Fehlerüberwachungs-Codes und das entsprechende wenigstens eine Fehlerüberwachungscode-Schema in einem Informations-Datenstrom umfasst, der Teil des Sende-Frames ist.

12. Verfahren zum Empfangen eines paketbasierten Datenstroms wenigstens einer Anwendung in einem der DAB-System, wobei das Verfahren die folgenden Schritte umfasst:
Empfangen eines Sende-Signals, das den Datenstrom umfasst,
Extrahieren wenigstens eines Sende-Frames, der den Datenstrom umfasst, aus dem Sende-Signal,
Extrahieren eines Haupt-Dienstkanals (Main Service Channel) aus dem Sende-Frame,
Extrahieren einer Unter-Struktur (Subchannel Structure) aus dem Haupt-Dienstkanal, die eine Verkettung einer vorgegebenen Anzahl von Datenpaketen und einer vorgegebenen Anzahl von Fehlerüberwachungs-Paketen umfasst, wobei jedes der Fehlerüberwachungs-Pakete Fehlerüberwachungscode-Daten, die wenigstens einen Teil der Datenpakete schützen, und ein CRC-Feld umfasst, das dem Fehlerüberwachungscode-Feld vorangeht, um dieses zu schützen, und wobei jedes der Datenpakete ein CRC-Feld umfasst,
Verifizieren der Daten-Integrität der Datenpakete unter Verwendung des CRC-Feldes, wobei Datenpakete, deren Datenintegrität nicht bestätigt wird, markiert werden, und
Korrigieren von Fehlern in den markierten Datenpaketen unter Verwendung wenigstens eines der Fehlerüberwachungs-Pakete.

13. Verfahren nach Anspruch 12, wobei jedes Datenpaket des Weiteren Fehlerüberwachungscode-Daten und ein Fehlerüberwachungscode-Feld umfasst, und
das Verfahren des Weiteren den Schritt des Korrigierens von Fehlern in einem Datenpaket unter Verwendung der Fehlerüberwachungscode-Daten des Datenpaketes umfasst, und
wobei das Datenpaket markiert wird, wenn die Fehler unter Verwendung der Fehlerüberwachungscode-Daten des Datenpaketes nicht korrigiert werden können.

14. Verfahren nach Anspruch 12 oder 13, wobei die Datenpakete und die Fehlerüberwachungs-Pakete vorgegebene Länge haben.

15. Verfahren nach einem der Ansprüche 12 bis 14, wobei jedes Datenpaket umfasst:
Einen Paket-Header, der die Identifizierung einer zugehörigen Anwendung und der Länge von Anwendungsdaten in einem Paketdaten-Feld ermöglicht, und
ein Paketdaten-Feld, das ein Feld mit den Anwendungsdaten der zugehörigen Anwendung umfasst,
und wobei jedes Fehlerüberwachungs-Paket umfasst:
ein Fehlerüberwachungscode-Feld, dessen Daten auf Basis wenigstens eines Teils des Paketdaten-Feldes und/oder wenigstens eines Teils des Paket-Headers erzeugt werden, und
ein CRC-Feld, das dem Fehlerüberwachungscode-Feld vorangeht, um dieses zu schützen.

16. Verfahren nach Anspruch 15, das des Weiteren die folgenden Schritte umfasst:
Verifizieren der Daten-Integrität des Fehlerüberwachungscode-Feldes jedes Fehlerüberwachungs-Paketes, und
Verwenden nur derjenigen Fehlerüberwachungscode-Pakete zum Korrigieren der markierten Datenpakete, für die Daten-Integrität verifiziert wird.

17. Verfahren nach Anspruch 15 oder 16, wobei einzelne Bytes von Datenpaketen und Fehlerüberwachungs-Paketen in Matrixform dargestellt werden können,
und jede Reihe der Matrix umfasst
die Bytes eines Datenpaketes, für das die Daten des Fehlercode-Feldes erzeugt worden sind, oder
Fehlerüberwachungscode-Bytes der Daten des Fehlerüberwachungscode-Feldes eines Fehlerüberwachungs-Paketes, und
wobei das Verfahren des Weiteren den Schritt des Verwendens der Fehlerüberwachungs-Bytes jeder Spalte zum Korrigieren eines Bytes wenigstens eines markierten Datenpaketes in der Spalte umfasst.

18. Verfahren nach einem der Ansprüche 12 bis 17, das des Weiteren die folgenden Schritte umfasst:
Extrahieren eines Informations-Datenstroms aus dem Sende-Frame, und
Extrahieren von Informationen über den wenigstens einen angewendeten Fehlerüberwachungscode und wenigstens ein entsprechendes Fehlerüberwachungscode-Schema, die zum Erzeugen der Fehlerüberwachungscode-Daten in den Fehlerüberwachungs-Paketen und/oder den Datenpaketen verwendet werden, aus dem Informations-Datenstrom.

19. Übertragungsstation zum Senden von Daten wenigstens einer Anwendung innerhalb einer Unterkanal-Struktur (Subchannel Structure) von Paketen in einem DAB-System, wobei die Übertragungsstation umfasst:
eine Verarbeitungseinrichtung zum Bilden einer vorgegebenen Anzahl von Datenpaketen, wobei jedes der Datenpakete durch Verketten eines Paket-Headers, der die Identifizierung einer zugehörigen Anwendung und der Länge von Anwendungsdaten in einem Paketdaten-Feld ermöglicht, und eines Paketdaten-Feldes, das ein Feld mit den Anwendungsdaten der zugehörigen Anwendung umfasst, gebildet wird,
wobei die Verarbeitungseinrichtung des Weiteren so eingerichtet ist, dass sie eine vorgegebene Anzahl von Fehlerüberwachungs-Paketen ausbildet, und jedes der Fehlerüberwachungs-Pakete durch Verketten eines Fehlerüberwachungscode-Feldes, dessen Daten auf Basis wenigstens eines Teils des Paketdaten-Feldes und/oder wenigstens eines Teils des Paket-Headers erzeugt werden, und eines CRC-Feldes, das dem Fehlerüberwachungscode-Feld vorangeht, um dieses zu schützen, gebildet wird,
dass sie eine Unterkanal-Struktur durch eine Verkettung der Datenpakete und der Fehlerüberwachungs-Pakete bildet, und
dass sie einen Sende-Frame erzeugt, der die ausgebildete Unterkanal-Struktur umfasst, und
eine Sendeeinrichtung zum Senden des Sende-Frames.

20. Übertragungsstation nach Anspruch 19, die des Weiteren eine Einrichtung umfasst, die so eingerichtet ist, dass sie das Verfahren nach einem der Ansprüche 6 bis 11 durchführt.

21. Endgerät zum Empfangen eines paketbasierten Datenstroms wenigstens einer Anwendung in einem DAB-System, wobei das Endgerät umfasst:
eine Empfangseinrichtung zum Empfangen eines Sende-Signals, das den Datenstrom umfasst,
eine Verarbeitungseinrichtung zum Extrahieren wenigstens eines Sende-Frames, der den Datenstrom umfasst, aus dem Sende-Signal,
wobei die Verarbeitungseinrichtung so eingerichtet ist, dass sie einen Haupt-Dienstkanal (Main Service Channel) aus dem Sende-Frame extrahiert, und
dass sie aus dem Haupt-Dienstkanal eine Unterkanal-Struktur (Subchannel Structure) extrahiert, die eine Verkettung einer vorgegebenen Anzahl von Datenpaketen und einer vorgegebenen Anzahl von Fehlerüberwachungs-Paketen umfasst, wobei jedes der Fehlerüberwachungs-Pakete Fehlerüberwachungscode-Daten, die wenigstens einen Teil der Datenpakete schützen, und ein CRC-Feld umfasst, das dem Fehlerüberwachungscode-Feld vorangeht, um dieses zu schützen, und jedes der Datenpakete ein CRC-Feld umfasst,
eine Verifizierungseinrichtung zum Verifizieren der Daten-Integrität der Datenpakete unter Verwendung des CRC-Feldes, wobei die Datenpakete, deren Daten-Integrität nicht bestätigt wird, markiert werden, und
eine Fehlerkorrektureinrichtung zum Korrigieren von Fehlern in den markierten Datenpaketen unter Verwendung wenigstens eines der Fehlerüberwachungs-Pakete.

22. Endgerät nach Anspruch 21, das des Weiteren eine Einrichtung umfasst, die so eingerichtet ist, dass sie das Verfahren nach einem der Ansprüche 12 bis 18 durchführt.

23. DAB-System zum Senden von Daten wenigstens einer Anwendung innerhalb einer Unterkanal-Struktur von Paketen nach einem der Ansprüche 1 bis 5.

24. Computerlesbares Medium zum Speichern von Befehlen, die, wenn sie auf einer Verarbeitungseinrichtung ausgeführt werden, die Verarbeitungseinrichtung veranlassen, Daten wenigstens einer Anwendung innerhalb einer Unterkanal-Struktur von Paketen in einem DAB-System zu senden, indem sie:
eine vorgegebene Anzahl von Datenpaketen bildet, wobei jedes der Datenpakete durch Verkettung eines Paket-Headers, der Identifizierung einer zugehörigen Anwendung und der Länge von Anwendungsdaten in einem Paketdaten-Feld ermöglicht, und eines Paketdaten-Feldes, das ein Feld mit den Anwendungsdaten der zugehörigen Anwendung umfasst, gebildet wird,
eine vorgegebene Anzahl von Fehlerüberwachungs-Paketen bildet, wobei jedes der Fehlerüberwachungs-Pakete durch Verketten eines Fehlerüberwachungscode-Feldes, dessen Daten auf Basis wenigstens eines Teils des Paketdaten-Feldes und/oder wenigstens eines Teils des Paket-Headers erzeugt werden, und eines CRC-Feldes, das dem Fehlerüberwachungscode-Feld vorangeht, um dieses zu schützen, gebildet wird,
eine Unterkanal-Struktur durch eine Verkettung der Datenpakete und der Fehlerüberwachungs-Pakete bildet,
einen Sende-Frame erzeugt, der die ausgebildete Unterkanal-Struktur umfasst, und den Sende-Frame sendet.

25. Computerlesbares Medium nach Anspruch 24, das des Weiteren Befehle speichert, die, wenn sie durch die Verarbeitungseinrichtung ausgeführt werden, die Durchführung der Verfahrensschritte nach einem der Ansprüche 6 bis 11 bewirken.

26. Computerlesbares Medium, das des Weiteren Befehle speichert, die wenn sie auf einer Verarbeitungseinrichtung ausgeführt werden, die Verarbeitungseinrichtung veranlassen, einen paketbasierten Datenstrom wenigstens einer Anwendung in einem DAB-System zu empfangen, indem sie:
ein Sende-Signal empfängt, das den Datenstrom umfasst,
wenigstens einen Sende-Frame, der den Datenstrom umfasst, aus dem Sende-Signal extrahiert,
einen Haupt-Dienstkanal (Main Service Channel) aus dem Sende-Frame extrahiert, eine Unterkanal-Struktur (Subchannel Structure) aus dem Haupt-Dienstkanal extrahiert, die eine Verkettung einer vorgegebenen Anzahl von Datenpaketen und einer vorgegebenen Anzahl von Fehlerüberwachungs-Paketen umfasst, wobei jedes der Fehlerüberwachungs-Pakete Fehlerüberwachungscode-Daten, die wenigstens einen Teil der Datenpakete schützen, und ein CRC-Feld umfasst, das dem Fehlerüberwachungscode-Feld vorangeht, um dieses zu schützen, und jedes der Datenpakete ein CRC-Feld umfasst,
die Daten-Integrität der Datenpakete unter Verwendung des CRC-Feldes verifiziert,
wobei Datenpakete, deren Daten-Integrität nicht bestätigt wird, markiert werden, und Fehler in den markierten Datenpaketen unter Verwendung wenigstens eines der Fehlerüberwachungs-Pakete korrigiert.

27. Computerlesbares Medium nach Anspruch 24, das des Weiteren Befehle speichert, die, wenn sie durch die Verarbeitungseinrichtung ausgeführt werden, die Durchführung der Verfahrensschritte nach einem der Ansprüche 12 bis 18 bewirken.

## Revendications

1. Structure de sous-canal dans un canal de service principal dans un système de diffusion audio numérique pour transmettre des données d'au moins une application, la structure de sous-canal comprenant:
un nombre prédéterminé de paquets de données, où chaque paquet de données comprend:
un en-tête permettant l'identification d'une application associée et la longueur d'un champ de données de paquet; et
le champ de données de paquet comprenant un champ avec des données d'application de ladite application identifiée, et
la structure de sous-canal comprenant en plus:
un nombre prédéterminé de paquets de contrôle d'erreurs, où chacun des paquets de contrôle d'erreurs comprend:
un champ de code de contrôle d'erreurs, où les données du champ de contrôle d'erreurs sont générées sur la base d'au moins une partie du champ de données de paquet et/ou d'au moins une partie de l'en-tête de paquet desdits paquets de données et
un champ CRC précédant ledit champ de code de contrôle d'erreurs dans le but de le protéger.

2. Structure de sous-canal selon la revendication 1, dans laquelle les paquets de données et les paquets de contrôle d'erreurs ont une longueur prédéterminée.

3. Structure de sous-canal selon la revendication 2, dans laquelle des octets individuels de paquets de données et de paquets de contrôle d'erreurs peuvent être représentés sous forme matricielle,
où chaque ligne de la matrice comprend
les octets d'un paquet de données pour lequel les données dudit champ de code d'erreurs ont été générées ou
des octets de code de contrôle d'erreurs desdites données dudit champ de code de contrôle d'erreurs d'un paquet de contrôle d'erreurs, et
où chacun des octets de contrôle d'erreurs de chaque colonne de la matrice est généré sur la base des octets des paquets de données dans ladite colonne.

4. Structure de sous-canal selon l'une des revendications 1 à 3, dans laquelle le champ de données de paquet dudit paquet de données comprend en plus un champ de code de contrôle d'erreurs généré sur la base d'au moins une partie du champ de données de paquet et/ou d'au moins une partie de l'en-tête de paquet.

5. Structure de sous-canal selon la revendication 1 ou 4, dans laquelle les données dudit champ de code de contrôle d'erreurs dans lesdits paquets de contrôle d'erreurs et/ou lesdits paquets de données forment des données de code de contrôle d'erreurs générées en utilisant un code Reed-Solomon ou un turbo code ou un autre code de correction d'erreurs avant.

6. Procédé de transmission de données d'au moins une application dans une structure de sous-canal de paquets dans un système de diffusion audio numérique, le procédé comprenant les étapes de:
former un nombre prédéterminé de paquets de donnée, où chacun des paquets de données est formé en concaténant un en-tête de paquet permettant l'identification d'une application associée et la longueur de données d'application dans un champ de données de paquet, et un champ de données de paquet comprenant un champ avec lesdites données d'application de l'application associée,
former un nombre prédéterminé de paquets de contrôle d'erreurs, où chacun des paquets de contrôle d'erreurs est formé en concaténant un champ de code de contrôle d'erreurs, dont les données sont générées sur la base d'au moins une partie du champ de données de paquet et/ou d'au moins une partie de l'en-tête de paquet et d'un champ CRC précédant ledit champ de code de contrôle d'erreurs pour le protéger,
former une structure de sous-canal par le biais d'une concaténation desdits paquets de données et desdits paquets de contrôle d'erreurs,
générer une séquence de trames de transmission comprenant ladite structure de sous-canal formée, et
transmettre lesdites trames de transmission.

7. Procédé selon la revendication 6, dans lequel les paquets de données et les paquets de contrôle d'erreurs ont une longueur prédéterminée.

8. Procédé selon la revendication 7, dans lequel des octets individuels de paquets de données et de paquets de contrôle d'erreurs peuvent être représentés sous forme matricielle,
où chaque ligne de la matrice comprend:
les octets d'un paquet de données pour lequel les données dudit champ de code d'erreurs ont été générées ou
des octets de code de contrôle d'erreurs desdites données dudit champ de code de contrôle d'erreurs d'un paquet de contrôle d'erreurs, et
le procédé comprend en plus l'étape consistant à générer chacun des octets de contrôle d'erreurs de chaque colonne de la matrice sur la base des octets des paquets de données dans ladite colonne.

9. Procédé selon l'une des revendications 6 à 8, dans lequel le champ de données de paquet de chaque paquet de données comprend en plus un champ de code de contrôle d'erreurs généré sur la base d'au moins une partie du champ de données de paquet et/ou d'au moins une partie de l'en-tête de paquet.

10. Procédé selon la revendication 6, comprenant en plus l'étape consistant à générer lesdites données dudit champ de code de contrôle d'erreurs dudit paquet de contrôle d'erreurs et/ou dudit paquet de données en utilisant un code Reed-Solomon ou un turbo code ou un autre code de correction d'erreurs avant.

11. Procédé selon la revendication 10, comprenant en plus l'étape consistant à transmettre une information concernant le code de contrôle d'erreurs utilisé pour générer les données dudit champ de code de contrôle d'erreurs des paquets de contrôle d'erreurs et/ou des paquets de données et le au moins un schéma de code de contrôle d'erreurs correspondant dans un flux de données d'information étant une partie de la trame de transmission.

12. Procédé de réception d'un flux de données par paquets d'au moins une application dans un système de diffusion audio numérique, le procédé comprenant les étapes de:
recevoir un signal de transmission comprenant ledit flux de données,
extraire du signal de transmission au moins une trame de transmission comprenant ledit flux de données,
extraire de la trame de transmission un canal de service principal,
extraire du canal de service principal une structure de sous-canal comprenant une concaténation d'un nombre prédéterminé de paquets de données et un nombre prédéterminé de paquets de contrôle d'erreurs, où chacun des paquets de contrôle d'erreurs comprend des données de code de contrôle d'erreurs protégeant au moins une partie desdits paquets de données et un champ CRC précédant ledit champ de code de contrôle d'erreurs pour le protéger et où chacun des paquets de données comprend un champ CRC,
vérifier l'intégrité de données desdits paquets de données en utilisant ledit champ CRC, où des paquets de données dont l'intégrité de données n'est pas confirmée sont marqués, et
corriger des erreurs dans lesdits paquets de données marqués en utilisant au moins l'un desdits paquets de contrôle d'erreurs.

13. Procédé selon la revendication 12, dans lequel chaque paquet de données comprend en plus des données de code de contrôle d'erreurs d'un champ de code de contrôle d'erreurs, et
le procédé comprend en plus l'étape de correction d'erreurs dans un paquet de données en utilisant lesdites données de code de contrôle d'erreurs du paquet de données et
où le paquet de données est marqué si les erreurs ne peuvent pas être corrigées en utilisant lesdites données de code de contrôle d'erreurs du paquet de données.

14. Procédé selon la revendication 12 ou 13, dans lequel les paquets de données et les paquets de contrôle d'erreurs ont une longueur prédéterminée.

15. Procédé selon l'une des revendications 12 à 14, dans lequel chaque paquet de données comprend:
un en-tête de paquet permettant l'identification d'une application associée et la longueur de données d'application dans un champ de données de paquet, et
un champ de données de paquet comprenant un champ avec lesdites données d'application de l'application associée,
et où chaque paquet de contrôle d'erreurs comprend:
un champ de code de contrôle d'erreurs, dont les données sont générées sur la base d'au moins une partie du champ de données de paquet et/ou d'au moins une partie de l'en-tête de paquet et
un champ CRC précédant ledit champ de code de contrôle d'erreurs pour le protéger

16. Procédé selon la revendication 15, comprenant en plus les étapes de:
vérifier l'intégrité de données dudit champ de code de contrôle d'erreurs de chaque paquet de contrôle d'erreurs et
pour corriger lesdits paquets de données marqués, utiliser uniquement les paquets de code de contrôle d'erreurs dont l'intégrité de données est vérifiée.

17. Procédé selon la revendication 15 ou 16, dans lequel des octets individuels de paquets de données et de paquets de contrôle d'erreurs peuvent être représentés sous forme matricielle,
où chaque ligne de la matrice comprend:
les octets d'un paquet de données pour lequel les données dudit champ de code d'erreurs ont été générées ou
des octets de code de contrôle d'erreurs desdites données dudit champ de code de contrôle d'erreurs d'un paquet de contrôle d'erreurs, et
le procédé comprend en plus l'étape consistant à utiliser les octets de contrôle d'erreurs de chaque colonne pour corriger un octet d'au moins un paquet de données marqué dans ladite colonne.

18. Procédé selon l'une des revendications 12 à 17, comprenant en plus les étapes de:
extraire de la trame de transmission un flux de données d'information et
extraire du flux de données d'information une information concernant le au moins un code de contrôle d'erreurs appliqué et au moins un schéma de code de contrôle d'erreurs correspondant utilisé pour générer les données de code de contrôle d'erreurs dans lesdits paquets de contrôle d'erreurs et/ou lesdits paquets de données.

19. Station de diffusion destinée à transmettre des données d'au moins une application dans une structure de sous-canal de paquets dans un système de diffusion audio numérique, la station de diffusion comprenant:
un moyen de traitement pour former un nombre prédéterminé de paquets de données, où chacun des paquets de données est formé en concaténant un en-tête de paquet permettant l'identification d'une application associée et la longueur de données d'application dans un champ de données de paquet, et un champ de données de paquet comprenant un champ avec lesdites données d'application de l'application associée,
où le moyen de traitement est en plus adapté pour former un nombre prédéterminé de paquets de contrôle d'erreurs, où chacun des paquets de contrôle d'erreurs est formé en concaténant un champ de code de contrôle d'erreurs, dont les données sont générées sur la base d'au moins une partie du champ de données de paquet et/ou d'au moins une partie de l'en-tête de paquet et un champ CRC précédant ledit champ de code de contrôle d'erreurs pour le protéger,
de former une structure de sous-canal par le biais d'une concaténation desdits paquets de données et desdits paquets de contrôle d'erreurs, et
de générer une trame de transmission comprenant ladite structure de sous-canal formée, et
un émetteur pour transmettre ladite trame de transmission.

20. Station de diffusion selon la revendication 19, comprenant en plus un moyen adapté pour exécuter le procédé selon l'une des revendications 6 à 11.

21. Terminal destiné à recevoir un flux de données par paquets d'au moins une application dans un système de diffusion audio numérique, le terminal comprenant:
un récepteur pour recevoir un signal de transmission comprenant ledit flux de données,
un moyen de traitement pour extraire du signal de transmission au moins une trame de transmission comprenant ledit flux de données,
où le moyen de traitement est adapté pour extraire de la trame de transmission un canal de service principal, et
pour extraire du canal de service principal une structure de sous-canal comprenant une concaténation d'un nombre prédéterminé de paquets de données et un nombre prédéterminé de paquets de contrôle d'erreurs, où chacun des paquets de contrôle d'erreurs comprend des données de code de contrôle d'erreurs protégeant au moins une partie desdits paquets de données et un champ CRC précédant ledit champ de code de contrôle d'erreurs pour le protéger et où chacun des paquets de données comprend un champ CRC,
un moyen de vérification pour vérifier l'intégrité de données desdits paquets de données en utilisant ledit champ CRC, où des paquets de données dont l'intégrité de données n'est pas confirmée sont marqués, et
un moyen de correction d'erreurs pour corriger des erreurs dans lesdits paquets de données marqués en utilisant au moins l'un desdits paquets de contrôle d'erreurs.

22. Terminal selon la revendication 21, comprenant en plus un moyen adapté pour exécuter le procédé selon l'une des revendications 12 à 18.

23. Système de diffusion audio numérique destiné à transmettre des données d'au moins une application dans une structure de sous-canal de paquets selon l'une des revendications 1 à 5.

24. Support lisible par ordinateur destiné à stocker des instructions qui, lorsqu'elles sont exécutées sur un processeur, amènent le processeur à transmettre des données d'au moins une application dans une structure de sous-canal de paquets dans un système de diffusion audio numérique en:
formant un nombre prédéterminé de paquets de données, où chacun des paquets de données est formé en concaténant un en-tête de paquet permettant l'identification d'une application associée et la longueur de données d'application dans un champ de données de paquet, et un champ de données de paquet comprenant un champ avec lesdites données d'application de l'application associée,
formant un nombre prédéterminé de paquets de contrôle d'erreurs, où chacun des paquets de contrôle d'erreurs est formé en concaténant un champ de code de contrôle d'erreurs, dont les données sont générées sur la base d'au moins une partie du champ de données de paquet et/ou d'au moins une partie de l'en-tête de paquet et un champ CRC précédant ledit champ de code de contrôle d'erreurs pour le protéger,
formant une structure de sous-canal par le biais d'une concaténation desdits paquets de données et desdits paquets de contrôle d'erreurs,
générant une trame de transmission comprenant ladite structure de sous-canal formée, et
en transmettant ladite trame de transmission.

25. Support lisible par ordinateur selon la revendication 24, stockant en plus des instructions qui, lorsqu'elles sont exécutées par le processeur, entraînent l'exécution des étapes du procédé selon l'une des revendications 6 à 11.

26. Support lisible par ordinateur destiné à stocker des instructions qui, lorsqu'elles sont exécutées sur un processeur, amènent le processeur à recevoir un flux de données par paquets d'au moins une application dans un système de diffusion audio numérique en:
recevant un signal de transmission comprenant ledit flux de données,
extrayant du signal de transmission au moins une trame de transmission comprenant ledit flux de données,
extrayant de la trame de transmission un canal de service principal,
extrayant du canal de service principal une structure de sous-canal comprenant une concaténation d'un nombre prédéterminé de paquets de données et d'un nombre prédéterminé de paquets de contrôle d'erreurs, où chacun des paquets de contrôle d'erreurs comprend des données de code de contrôle d'erreurs protégeant au moins une partie desdits paquets de données et un champ CRC précédant ledit champ de code de contrôle d'erreurs pour le protéger et où chacun des paquets de données comprend un champ CRC,
vérifiant l'intégrité de données desdits paquets de données en utilisant ledit champ CRC, où des paquets de données dont l'intégrité de données n'est pas confirmée sont marqués, et
en corrigeant des erreurs dans lesdits paquets de données marqués en utilisant au moins l'un desdits paquets de contrôle d'erreurs.

27. Support lisible par ordinateur selon la revendication 24, stockant en plus des instructions qui, lorsqu'elles sont exécutées par le processeur, entraînent l'exécution des étapes du procédé selon l'une des revendications 12 à 18.
